(19) Europäisches Patentamt
European Patent Office
Office européen des brevets

(11) **EP 1 858 254 A2**

(12) **EUROPEAN PATENT APPLICATION**

(43) Date of publication:
**21.11.2007 Bulletin 2007/47**

(51) Int Cl.:
**H04N 5/235** $^{(2006.01)}$

(21) Application number: **07251975.4**

(22) Date of filing: **14.05.2007**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK YU**

(30) Priority: **16.05.2006 JP 2006136928**

(71) Applicant: **Ricoh Company, Ltd.**
**Tokyo 143-8555 (JP)**

(72) Inventor: **Koyama, Kenji**
**c/o Ricoh Company, Ltd.**
**Ohta-ku, Tokyo 143-8555 (JP)**

(74) Representative: **Leeming, John Gerard**
**J.A. Kemp & Co.**
**14 South Square**
**Gray's Inn**
**London WC1R 5JJ (GB)**

(54) **Image capture apparatus with improved flash control**

(57)    An image capturing apparatus includes a lens, a photoelectric converting device, a ranging unit, a lighting unit, a first light controller, a second light controller, and a controlling unit. The photoelectric converting device converts an optical image focused by the lens to an electric signal. The ranging unit measures a distance between the lens and the object. The first light controller instructs a projection of a preliminary light from the lighting unit to the object, computes an emission intensity of a light flash required for capturing the image of the object based on a reflection light, and instructs an emission of a first light flash. The second light controller instructs a projection of a second light flash from the lighting unit to the object, receives a reflection light reflected with a light receiver, and stops the projection of the second light flash when the light receiver receives a given amount of light intensity. The controlling unit activates the first and second light controller selectively or concurrently.

FIG. 3A

FIG. 3
FIG. 3A
FIG. 3B

FIG. 3A flowchart:
START → S1 RL1 IS ON? — NO loops back; YES → S2 DETERMINE LIGHT INTENSITY → S3 MEASURE DISTANCE TO OBJECT → S4 FOCUSING OPERATION → S5 RL2 IS ON? — NO → S5a RL1 IS ON? (YES loops back, NO loops back); YES → 1

**(Cont. next page)**

# FIG. 3B

①

↓

**S6** — FLASH OPERATION IS REQUIRED? — NO →

↓ YES

**S8** — DISTANCE TO OBJECT IS SHORTER THAN REFERENCE DISTANCE? — NO →

↓ YES

**S10** — PRELIMINARY LIGHT EMISSION

↓

**S11** — MEASURE LIGHT INTENSITY OF REFLECTION LIGHT

↓

**S12** — COMPUTE LIGHT INTENSITY FOR FLASH

↓

**S13** — IMAGE CAPTURING WITH FLASH

**S16** — SET EXPOSING VALUE

↓

**S17** — START IMAGE CAPTURING

↓

**S18** — START FLASH

↓

**S19** — SENSOR RECEIVE A GIVEN LIGHT INTENSITY? — NO →

↓ YES

**S20** — STOP FLASH

**S21** — IMAGE CAPTURING WITHOUT FLASH

↓

**S14** — COMPLETE EXPOSING OPERATION

↓

**S15** — STORE IMAGE DATA

↓

RETURN

**Description**

The present disclosure generally relates to an image capturing apparatus having a lighting unit, and more particularly to a method of controlling a flash operation for an image capturing apparatus.

An image capturing apparatus such as still camera may have a lighting unit such as a flash having a discharge tube.

Such lighting unit may have a capacitor having a large capacitance. The capacitor may be charged by applying by a voltage, and may be discharged through a discharge tube, e.g. filled with xenon gas, in a short period of time to generate a flash to illuminate a subject.

Such lighting unit may have a higher emission intensity and a short flash time (e.g., 1 msec), which may be favorable for recording an image (or picture).

Furthermore, with an increased performance of semiconductor switching element, the emission intensity may be controlled with a relatively simple semiconductor circuit, by which such lighting unit may be miniaturized.

With such background, still cameras ranging from professional-use type to commodity type may have a built-in lighting unit.

Such still camera may have a controller to control an emission intensity of the lighting unit (e.g., flash unit) so that a still camera can capture an image of an object with an optimal exposure level obtained by using the lighting unit.

Specifically, a still camera may employ a flashmatic method or an autostrobo (TM) method for controlling an emission intensity of the lighting unit.

In case of flashmatic (TM) method, a controller may determine a light intensity of the lighting unit for capturing an image of an object based on a shooting distance between a camera and an object.

In case of autostrobo method, a controller may determine a light intensity of the lighting unit for capturing an image by checking a light intensity of reflection light, reflected from an object. Specifically, the controller may check a light intensity of reflection light and stop a flash operation when a camera receives a given amount of reflection light.

A camera having a wider shooting range (e.g., shorter to longer distance range) may be realized by combining a plurality of light controlling methods such as flashmatic method and autostrobo method, for example.

As one example related art, a camera may employ a flashmatic mode for close objects and an autostrobo mode for far objects so that the camera may have a wider shooting range for image capturing.

However, in such flashmatic mode, a close object may be overexposed or underexposed depending on a reflection coefficient of the object to be captured by the camera. Furthermore, the camera may not perform a correct exposure of an object if a measurement of distance to object is in error.

Furthermore, in case of autostrobo method, if an optical window of light intensity sensor (or exposure sensor) is contaminated by dust or the like, the camera may not have a preferable exposure level for image capturing operation, which may lead to an failed image.

The present invention relates to an image capturing apparatus for capturing an image of an object. The image capturing apparatus includes a lens, a photoelectric converting device, a ranging unit, a lighting unit, a first light controller, a second light controller, and a controlling unit. The lens focuses an object as an optical image on the photoelectric converting device. The photoelectric converting device converts the optical image to an electric signal. The ranging unit measures a distance between the lens and the object. The lighting unit emits a light flash when capturing the image of the object. The first light controller instructs a projection of a preliminary light from the lighting unit to the object before conducting an image capturing operation, computes an emission intensity of a light flash required for capturing the image of the object based on the electric signal output by the photoelectric converting device, which is generated from a light intensity of a reflection light reflected from the object, and instructs an emission of a first light flash having the computed emission intensity for image capturing operation. The second light controller instructs a projection of a second light flash from the lighting unit to the object when capturing the image of the object, receives a reflection light reflected from the object with a light receiver provided for the second emission intensity, and stops the projection of the second light flash when the light receiver receives a given amount of light intensity of the reflection light. The controlling unit activates the first and second light controller selectively or concurrently depending on an image capturing condition.

Additional features and advantages of the present invention will be more fully apparent from the following detailed description of exemplary embodiments and the accompanying drawings in which:

FIGS. 1A, 1B and 1C are schematic views of an image capturing apparatus according to an example embodiment;
FIG. 2, comprising Figs. 2A, 2B and 2C, is a block diagram of an image capturing apparatus of FIG. 1;
FIG. 3, comprising Figs. 3A and 3B, is a flow chart for explaining an image capturing operation of an image capturing apparatus according to an example embodiment;
FIG. 4, comprising Figs. 4A and 4B, is another flow chart for explaining another image capturing operation of an image capturing apparatus according to an example embodiment;
FIG. 5, comprising FIGs. 5A and 5B, is another flow chart for explaining another image capturing operation of an image capturing apparatus according to an example embodiment;
FIG. 6, comprising FIGs. 6A and 6B, is another example flow chart for explaining another image capturing operation of an image capturing apparatus according to an example embodiment;

FIG. 7 is another flow chart for explaining another image capturing operation of an image capturing apparatus according to an example embodiment;

FIG. 8, comprising FIGS. 8A and 8B, is another flow chart for explaining another image capturing operation of an image capturing apparatus according to an example embodiment;

FIGs. 9A and 9B show schematic lighting patterns of light flashes for the image capturing apparatus of FIG. 1, in which a priority level is set to the controlling methods;

FIGs. 10A and 10B are schematic views of a ranging unit of the image capturing apparatus of FIG. 1;

FIG. 11 is a schematic view of a light sensor and light-receiving blocks included in a light sensor;

FIGs. 12A and 12B show received light data received by each light-receiving block;

FIG. 13 shows received light data received by each light-receiving block, in which a difference between two images is shown; and

FIG. 14 is a graph for explaining a relationship between a focus distance and a focus lens position.

The accompanying drawings are intended to depict example embodiments of the present invention and should not be interpreted to limit the scope thereof. The accompanying drawings are not to be considered as drawn to scale unless explicitly noted.

It will be understood that if an element or layer is referred to as being "on," "against," "connected to" or "coupled to" another element or layer, then it can be directly on, against connected or coupled to the other element or layer, or intervening elements or layers may be present. In contrast, if an element is referred to as being "directly on", "directly connected to" or "directly coupled to" another element or layer, then there is no intervening elements or layers present.

Like numbers refer to like elements throughout. As used herein, the term "and/or" includes any and all combinations of one or more of the associated listed items.

Spatially relative terms, such as "beneath", "below", "lower", "above", "upper" and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" the other elements or features. Thus, term such as "below" can encompass both an orientation of above and below. The device may be otherwise oriented (rotated 90 degrees or at other orientations) and the spatially relative descriptors used herein interpreted accordingly.

Although the terms first, second, etc. may be used herein to describe various elements, components, regions, layers and/or sections, it should be understood that these elements, components, regions, layers and/or sections should not be limited by these terms. These terms are used only to distinguish one element, component, region, layer or section from another region, layer or section. Thus, a first element, component, region, layer or section discussed below could be termed a second element, component, region, layer or section without departing from the teachings of the present invention.

The terminology used herein is for the purpose of describing particular embodiments only and is not intended to be limiting of the present invention. As used herein, the singular forms "a", "an" and "the" are intended to include the plural forms as well, unless the context clearly indicates otherwise. It will be further understood that the terms "includes" and/or "including", when used in this specification, specify the presence of stated features, integers, steps, operations, elements, and/or components, but do not preclude the presence or addition of one or more other features, integers, steps, operations, elements, components, and/or groups thereof.

In describing example embodiments shown in the drawings, specific terminology is employed for the sake of clarity. However, the present disclosure is not intended to be limited to the specific terminology so selected and it is to be understood that each specific element includes all technical equivalents that operate in a similar manner.

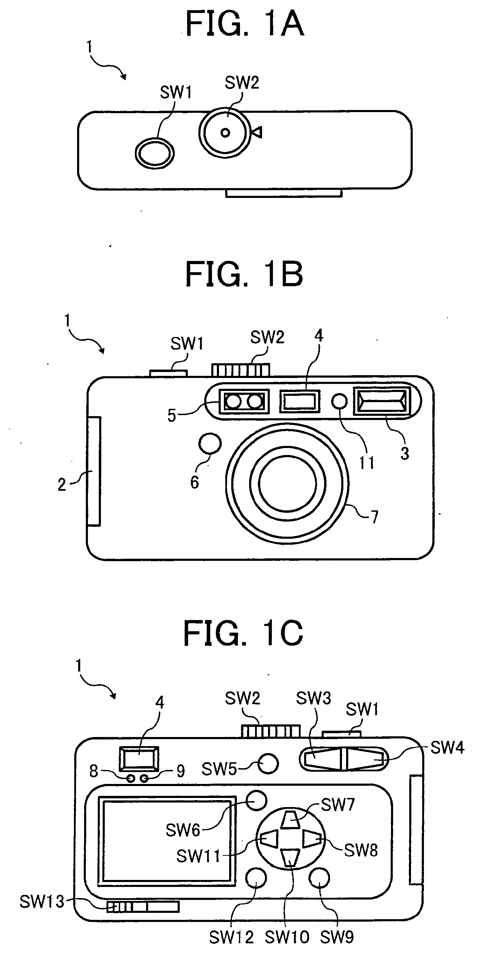

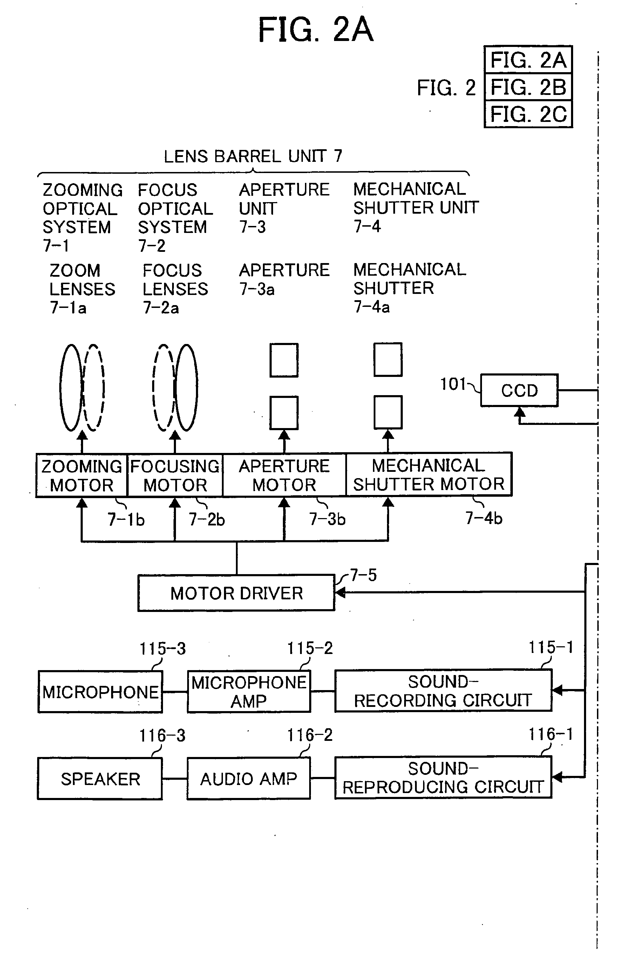

Referring now to the drawings, wherein like reference numerals designate identical or corresponding parts throughout the several views, an image capturing apparatus according to an example embodiment is described with particular reference to FIGs. 1A to C and 2A to C.

FIGs. 1A to C are schematic view of an image capturing apparatus 1 such as digital camera from above, in front and behind respectively. FIGs. 2A to C combined are a block diagram for the image capturing apparatus 1 shown in FIGs. 1A to C.

As shown in FIGs. 1A to C, the image capturing apparatus 1 may include a SD (smart disk) card/battery lid 2, a light flash emitting unit 3, an optical finder 4, a ranging unit 5, an exposure sensor 6, a lens barrel unit 7, an AFLED (auto-focus light emitting diode) 8, a light emitting unit LED (light emitting diode) 9, an LCD (liquid crystal display) monitor 10, a self LED (light emitting diode) 11, and a plurality of switches SW1 to SW13, for example.

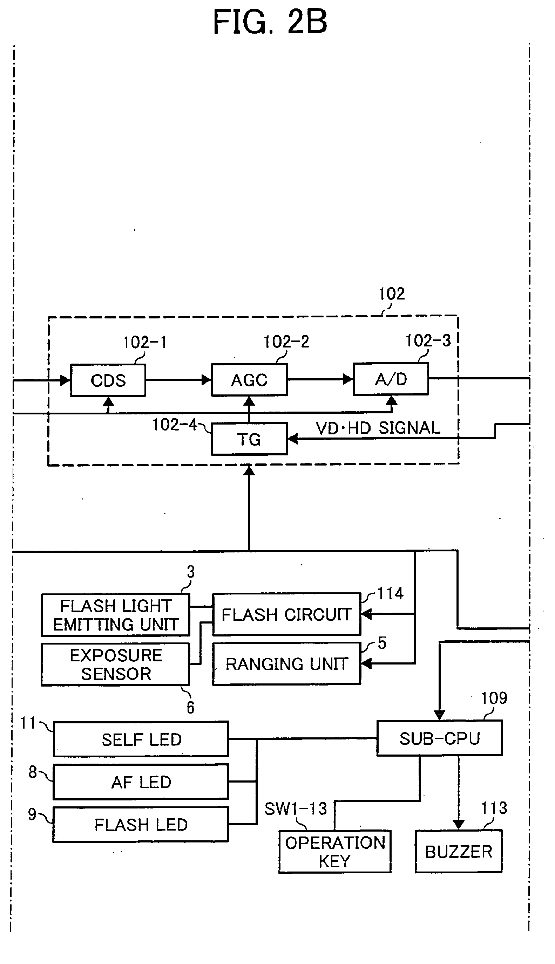

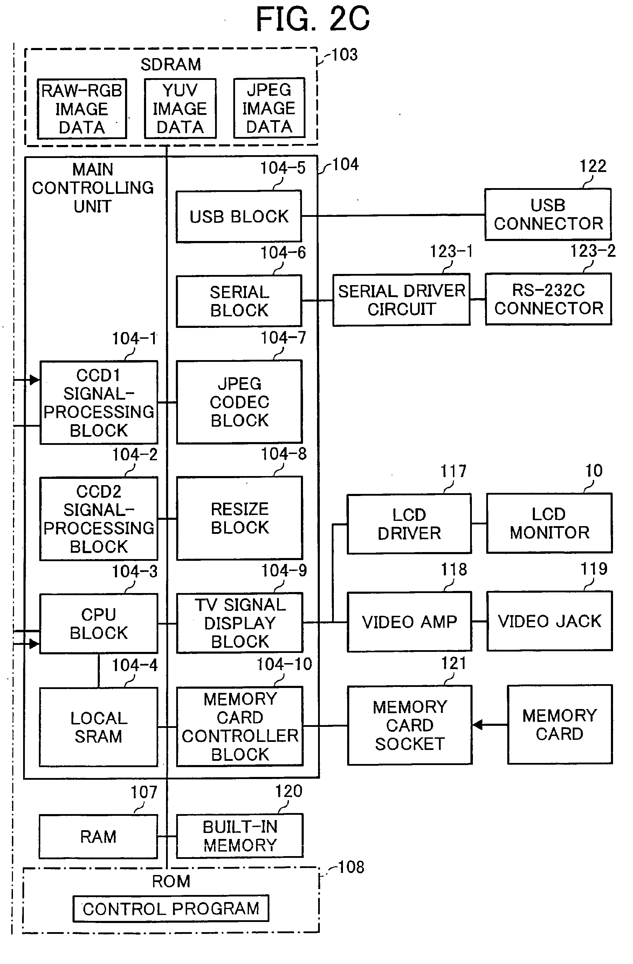

Furthermore, as shown in FIG. 2, the image capturing apparatus 1 may include a F/E-IC (front/end integrated circuit) 102, a SDRAM (synchronous dynamic random access memory) 103, a main controlling unit 104, a RAM (random access memory) 107, a ROM (read only memory) 108, a SUB-CPU (central processing unit) 109, a buzzer 113, a flash circuit 114, an audio recording unit 115, an audio replay unit 116, an LCD driver 117, a video AMP 118, a video jack plug 119, a built-in memory 120, a memory card socket 121, an USB (universal serial bus) connector 122, and a serial input/output device 123, for example.

As shown in FIG. 2, the lens barrel unit 7 may include a zooming optical system 7-1, a focus optical system 7-2, an aperture unit 7-3, a mechanical shutter unit 7-4, and a motor driver 7-5, for example.

The zooming optical system 7-1 may include a zoom lens 7-1a for taking an optical image of an object, and a zooming drive motor 7-1b.

The focus optical system 7-2 may include a focus lens 7-2a, and focusing motor 7-2b.

The aperture unit 7-3 may include an aperture 7-3a, and aperture motor 7-3b.

The mechanical shutter unit 7-4 may include a mechanical shutter 7-4a, and a mechanical shutter motor 7-4b.

The motor driver 7-5 may drive the above-mentioned motors. The motor driver 7-5 may be controlled by a drive command transmitted from a CPU block 104-3 in the main controlling unit 104, to be described later.

The CPU block 104-3 may transmit such drive command corresponding to an operation by switches SW1 to SW13.

The switches SW1 to SW13 may be termed as "operation key" as a whole.

The ROM 108 may store a control program and control parameter written with codes decodable by the CPU block 104-3. When the image capturing apparatus 1 may be set to a power ON-condition, such program may be loaded to a main memory (not shown).

The CPU block 104-3 may control operations to be conducted by the image capturing apparatus 1 with such program. The CPU block 104-3 may temporarily store data needed for controlling operations conducted by the image capturing apparatus 1 to the RAM 107 or local SRAM (static random access memory) 104-4 in the main controlling unit 104.

The ROM 108 may include a rewritable flash ROM, by which the image capturing apparatus 1 can change or update control programs or control parameters to a latest one. Such feature may be preferable for upgrading a function of the image capturing apparatus 1.

The CCD (charge-coupled device) 101 may be a solid-state image-sensing device used as photoelectric converter, which may convert an optical image to electric signal. The CCD 101 may be used as image pickup device.

The F/E (front end)-IC 102 may include a CDS 102-1, an AGC 102-2, an A/D 102-3, a CCD 101, and a TG 102-4, for example.

The CDS 102-1 may conduct a correlated double sampling for eliminating noise from image data. The AGC 102-2 may conduct an adjustment of gain control for image data. The A/D 102-3 may convert analog signal to digital signal. The TG 102-4 may receive a vertical sync signal (hereinafter, "VD signal") or horizontal sync signal (hereinafter, "HD signal") from a CCD1 signal processing block 104-1, and may generate a drive timing signal of the F/E-IC 102 and the CCD 101 under a control of the CPU block 104-3.

The main controlling unit 104 may conduct a white balance setting or gamma setting to image data, output from the CCD 101 to the F/E-IC 102.

As shown in FIG. 2, the main controlling unit 104 may include a CCD1 signal processing block 104-1, a CCD2 signal processing block 104-2, a CPU block 104-3, a local SRAM 104-4, a USB (universal serial bus) block 104-5, a serial block 104-6, a JPEG CODEC block 104-7, a RESIZE block 104-8, a TV signal block 104-9, and a memory card controller block 104-10, for example.

The CCD1 signal processing block 104-1 may supply a VD signal or a HD signal to the TG 102-4.

The CCD2 signal processing block 104-2 may convert data to brightness data/color-difference data with a filtering process.

The CPU block 104-3 may control operations in the image capturing apparatus 1 as a whole.

The local SRAM 104-4 may temporarily store data used for controlling operations in the image capturing apparatus 1.

The USB block 104-5 may be used to conduct a USB communication between the image capturing apparatus 1 and an external apparatus such as personal computer.

The serial block 104-6 may be used to conduct a serial communication between the image capturing apparatus 1 and an external apparatus such as personal computer.

The JPEG (joint photographic experts group) CODEC block 104-7 may conduct a data compression/decompression in JPEG format.

The RESIZE block 104-8 may enlarge/or reduce the size of image data with an interpolating process.

The TV signal block 104-9 may convert image data to video signals to display image data on an external display device such as liquid crystal display monitor or TV.

The memory card controller block 104-10 may control a memory card for recording image data captured by the image capturing apparatus 1.

The SDRAM 103 may temporarily store image data when the main controlling unit 104 processes image data. The main controlling unit 104 may receive image data from the CCD 101 via the F/E-IC 102, and may conduct processing of image data.

The SDRAM 103 may store RAW-RGB image data, YUV image data, and JPEG image data proceeded by the main controlling unit 104, for example.

The RAW-RGB image data may be image data having white balance setting or gamma setting, set by the CCD1 signal processing block 104-1.

The YUV image data may be image data having converted to brightness data/color-difference data by the CCD2 signal processing block 104-2.

The JPEG image data may be JPEG formatted image data compressed by the JPEG CODEC block 104-7.

The memory card socket 121 may be a socket to attach a detachable memory card.

The built-in memory 120 may store captured image data in a case when a memory card is not attached to the memory card socket 121.

The LCD driver 117 may include a driving circuit for driving an LCD monitor 10. The LCD driver 117 may convert video signal, output from the TV signal block 104-9, to a signal, which can be displayed on the LCD monitor 10.

The LCD monitor 10 may be used to monitor a condition of an object before capturing an image, to replay a captured image, and to display an image recorded in a memory card or built-in memory 120 as image data, for example.

The video AMP 118, having given impedance such as 75Ω impedance, may amplify or convert video signals, output from the TV signal block 104-9.

The video jack plug 119 may be used to connect (or couple) the image capturing apparatus 1 with an external display device such as TV.

The USB connector 122 may be used to connect (or couple) the image capturing apparatus 1 with an external apparatus such as personal computer.

The serial driver circuit 123-1 may convert a voltage signal, output from the serial block 104-6 to conduct a serial communication between the image capturing apparatus 1 with an external apparatus such as personal computer.

The RS-232C connector 123-2 may be used to connect (or couple) the image capturing apparatus 1 with an external apparatus such as personal computer with a serial manner.

The SUB-CPU 109 may include a CPU having ROM/RAM installed on one chip. The SUB-CPU 109 may receive signals, output from operation keys SW1 to SW13 selectable by a user or operator, and output such signals to the CPU block 104-3.

The SUB-CPU 109 may receive signals indicating conditions of the image capturing apparatus 1 from the CPU block 104-3, and convert ahd output signals to the self LED 11, AFLED 8, flash LED 9, and buzzer 13 as signals for controlling the self LED 11, AFLED 8, flash LED 9, and buzzer 13.

The self LED 11 may display a light to indicate that a self-timer operation is in progress when a self-timer function is selected.

The AFLED 8 may be an LED displaying a light for indicating a focus distance is adjusted for an object to be captured.

The flash unit LED 9 may be an LED for displaying a light indicating a light flash emitting unit 3 is in a charging or charged condition.

Such AFLED 8 or flash LED 9 may also be used to indicate other information such as memory card is in an access process with the image capturing apparatus 1, for example.

A user (or operator) may operate the operation keys (e.g., SW1 to SW 13) to operate the image capturing apparatus 1.

The flash circuit 114 may include a charging unit and a light emitting controller.

The charging unit may increase voltage of battery to charge a capacitor having a given capacitance (e.g., 100 μF to 200 μF) to a given voltage (e.g., 300 volt).

The light emitting controller may control the light flash intensity emitted from the light flash emitting unit 3 by supplying or stopping a charged energy of the capacitor to a xenon tube of the light flash emitting unit 3 so that the light flash emitting unit 3 may emit light to an object.

The exposure sensor 6 may receive a reflection light, reflected from an object, and convert the received light to corresponding electric current (or signal).

An integrating capacitor may integrate such electric current (or signal).

The flash circuit 114 may include a light control circuit, which may stop a flash of light flash emitting unit 3 when the integrated value of electric current (or signal) may become a given level.

The audio recording unit 115 may include a sound recording circuit 115-1, a microphone AMP 115-2, and a microphone 115-3.

A user (or operator) may input audio signals to the microphone 115-3, and the microphone AMP 115-2 may amplify such input signals. The sound recording circuit 115-1 may record amplified signals.

The audio replay unit 116 may include a sound reproducing circuit 116-1, an audio AMP 116-2, and a speaker 116-3.

The sound reproducing circuit 116-1 may convert the recorded audio signals to another signals outputable from the speaker 116-3. The audio AMP 116-2 may amplify such converted signals and drive the speaker 116-3. The speaker 116-3 may output signals as sound.

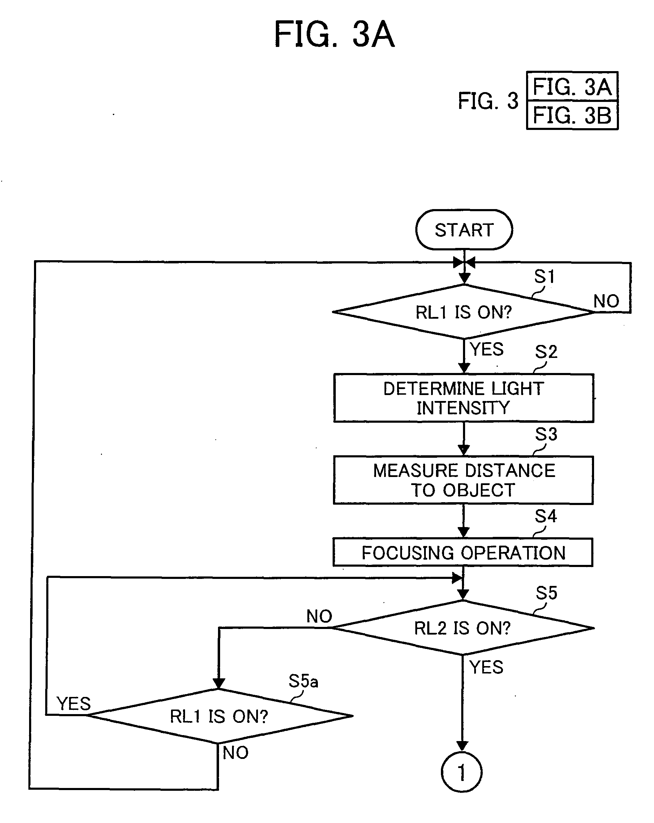

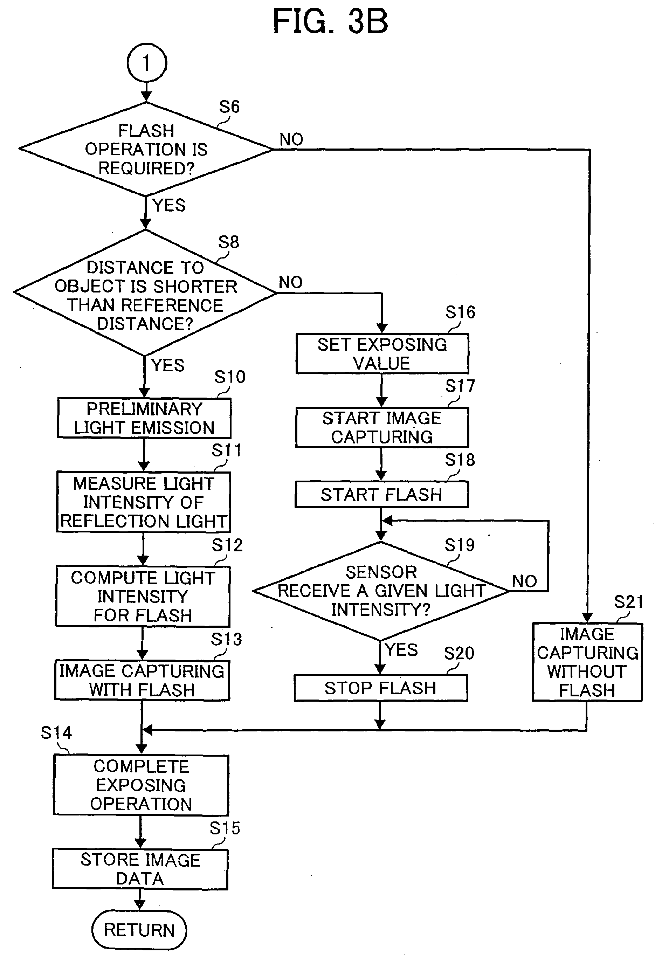

FIG. 3 show a flow chart for explaining a process of image capturing operation to be conducted by the image capturing apparatus according to an example embodiment.

The main controlling unit 104 may control such process. Hereinafter, the main controlling unit 104 may be termed "controlling unit" when explaining a process of image capturing operation for the simplicity of explanation, as required.

A shutter button SW1 may include a two-stage mechanical switch, for example.

Hereinafter, a signal corresponding to a first stage (or half pushed condition of shutter button SW1) is referred as signal RL1, and a signal corresponding to a second stage (or full pushed condition of shutter button SW1) is referred as signal RL2.

As shown in FIG. 3, the signal RL1 is activated (i.e., RL1 is ON condition) at step S1

At step S2, the controlling unit may determine a light intensity of a light coming or reflecting from an object based on an output signal of the CCD 101 (used as image pickup device). Specifically, when the RL1 is ON condition, the CCD 101 receives a light coming or reflecting from the object, and converts such optical signal to electric signal.

At step S3, the controlling unit determines a distance to the object as measured distance.

At step S4, the controlling unit conducts a focusing operation corresponding to the measured distance.

As such, the controlling unit conducts steps S1 to S3 when the signal RL1 is activated, and waits a generation of the signal RL2.

If the controlling unit detects an OFF-condition of the signal RL1 at step S1, the process goes back to the initial condition (or condition waiting a generation of signal RL1). The OFF-condition of the signal RL1 may occur when a user releases the half-pushed shutter button SW1.

At step S5, the controlling unit judges whether the signal RL2 is activated (or ON condition).

If the controlling unit judges that the signal RL2 is activated at step S5, the controlling unit then judges whether a flash operation is required for capturing an image at step S6. In other words, the controlling unit judges whether an exposure level of the object is enough for capturing an image of the object.

Specifically, the controlling unit may judge whether a flash operation is required for image capturing by comparing a given condition and a measured condition.

For example, the controlling unit may compare a first exposure time and second exposure time.

The first exposure time may be an upper limit time that an image capturing can be conducted without a handshaking effect.

The second exposure time may be a time, which may be determined with the signal RL1, a F-number of a lens, and ISO (international standard organization) sensitivity of the CCD 101 (as image pickup device). The second exposure time may become any value depending on an actual condition.

In general, the first exposure time may be set as a threshold time whether a hand shaking may occur. Specifically, a user of image capturing apparatus 1 may cause a hand shaking effect when the first exposure time has elapsed.

If the second exposure time is shorter than the first exposure time, a user of image capturing apparatus 1 may not cause a hand shaking effect. In such condition, an image capturing operation may be preferably conducted without a flash operation.

If the second exposure time becomes longer than the first exposure time, a user of image capturing apparatus 1 may cause a hand shaking effect. In such condition, an image capturing operation may not be preferably conducted.

Accordingly, as one example, the controlling unit may use a flash operation when the second exposure time becomes longer than the first exposure time so that an image capturing operation may be preferably conducted without a hand shaking effect.

Other conditions for judging a necessity of flashing operation may be set, as required.

If the controlling unit judges that the second exposure time is shorter than the first exposure time, the controlling unit judges that a flash operation is not required at step 6.

Then, the controlling unit conducts an image capturing operation without using the light flash emitting unit 3 at steps S21 and S14, and store a captured image to a memory at step S15, and completes the image capturing operation.

If the controlling unit judges that the second exposure time is longer than the first exposure time, the controlling unit judges that a flash operation is required at step 6, and then the process goes to step S8.

At step S8, the controlling unit judges whether a distance to the object is shorter or longer than a reference distance value. Specifically, the controlling unit may compare the reference distance value with a measured distance value for object measured at step S3.

If the measured distance value to the object is longer than the reference distance value, the controlling unit instructs an image capturing operation using the flash light emitting unit 3 in steps S16 to S18.

In such image capturing operation, the exposure sensor 6 receives a reflection light reflected from the object, and outputs a signal corresponding to a received light intensity.

At step S19, the controlling unit judges whether the exposure sensor 6 has received a given amount of light intensity.

If the controlling unit judges that the exposure sensor 6 has received a given amount of light intensity at step S19, the controlling unit stops a flash operation at step S20, arid completes the image capturing operation at steps S14 and S15.

Such image capturing operation at steps S16 to S20 may be conducted with an autostrobo method, for example.

If the controlling unit judges that the measured distance value to the object is shorter than the reference distance value at step S8, the controlling unit may conduct a preliminary light emission with the light flash emitting unit 3 before conducting an image capturing operation at step S10.

At step S11, the CCD 101 (or image pickup device) measures a light intensity of reflection light reflected from the object, and outputs a corresponding electric signal to the controlling unit.

Based on such electric signal, at step S12, the controlling unit computes an emission intensity of light flash to be emitted by the light flash emitting unit 3 as required for an image capturing operation.

Specifically, the controlling unit computes a difference between an optimal exposure and a measured exposure, computes an emission intensity of the light flash to be emitted by the light flash emitting unit 3 based on such computed difference, and conducts an image capturing operation using the light flash emitting unit 3 with such computed light intensity at step S13, and completes the image capturing operation at steps S14 and S15.

Such image capturing operation at steps S10 to S13 method may be termed "preliminary light emission method."

The controlling unit may compute a light intensity for preliminary light emission based on a distance to an object, a F-number of lens, and a sensitivity of CCD 101 (used as image pickup device).

Hereinafter, a light emission intensity of the light flash or the like may be referred "emission intensity" or "light intensity" in this disclosure.

Furthermore, the controlling unit may refer to a given reference distance to judge whether an object is in a shorter or longer distance from the image capturing apparatus 1.

Such reference distance may be determined based on first distance range exposable with the preliminary light emission method and a second distance range exposable with the autostrobo method.

Such preliminary light emission method may be controlled by a first light controller, and such autostrobo method may be controlled by a second light controlling unit in an example embodiment, for example.

Specifically, if the controlling unit may set such reference distance, which may be overlappingly controlled by both methods, the controlling unit may control an exposure condition in a wider range (e.g., from a shorter distance to longer distance). Such exposable distance range for both method may be adjusted as below.

An exposable distance range may shift to a shorter distance for object when a F-number of lens becomes greater and a sensitivity of CCD 101 becomes relatively lower.

A exposable distance range may shift to a longer distance for object when a F-number of lens becomes smaller and a sensitivity of CCD 101 becomes relatively higher.

The above-mentioned given reference distance for judging a distance to an object may be changed depending on a F-number of lens and a sensitivity of CCD 101.

In a case that a user (e.g., photographer) may want to select any one of autostrobo method and preliminary light emission method by considering photographic effect, such user (e.g., photographer) can select any one of such methods with a selection button or switch provided to the image capturing apparatus 1 before conducting an image capturing operation.

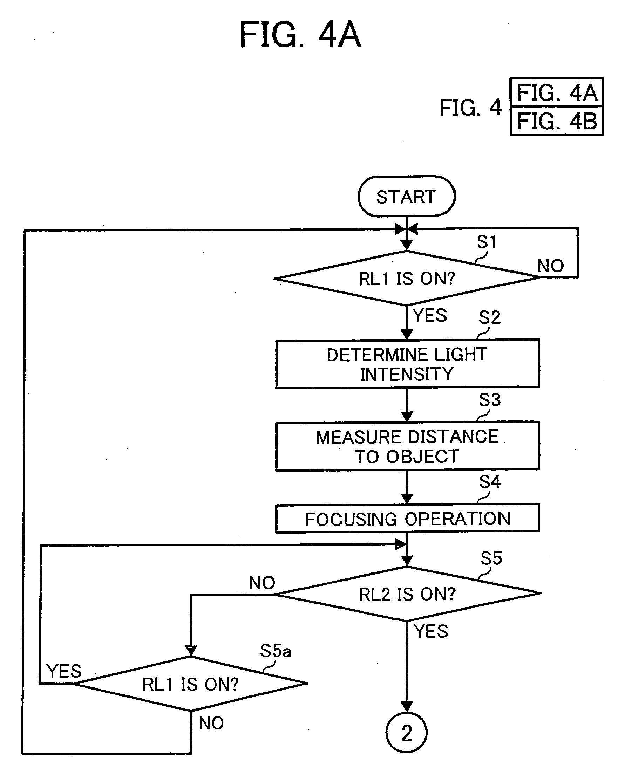

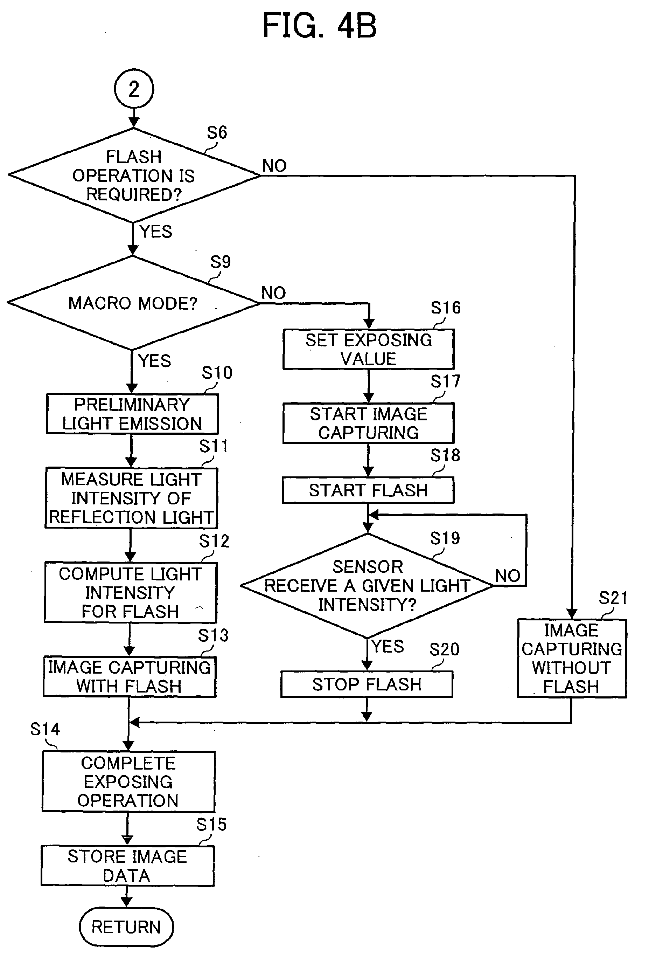

FIG. 4 (comprising FIGs. 4A and 4B) is another flow chart for explaining a process of image capturing operation according to an example embodiment. The process of image capturing operation shown in FIG. 4 may have a step S9 instead of step S8 shown in FIG. 3.

At step S9, the controlling unit judges whether a "macro mode" is activated.

In case of macro mode, the image capturing apparatus 1 captures an image of object at a shorter distance (e.g., close-up shooting) compared to normal mode (e.g., non-macro mode).

Accordingly, the first light controller for preliminary light emission method may be used for the macro mode, and the second light controlling unit for autostrobo method may be used for the normal mode (or non-macro mode).

When the macro mode is activated at step S9, the controlling unit controls a flash operation to be conducted by the flash light emitting unit 3 with the preliminary light emission method.

When the macro mode is not activated at step S9, the controlling unit controls a flash operation to be conducted by the light flash emitting unit 3 with the autostrobo method.

In the control process shown in FIG. 4, the controlling unit judges whether a macro mode is activated instead of a distance judgment conducted at step S8 in FIG. 3.

However, the control process shown in FIG. 3 may be modified by adding step S9 for macro mode judgment before step S8 for distance judgment. In such a case, a first lighting controller or a second lighting controller may be selected after judging a distance to the object at step S8.

In such situation, even if a macro mode is selected, the first lighting controller may not be used compulsorily, and even if a non-macro mode is selected, the second lighting controller is not activated automatically, for example.

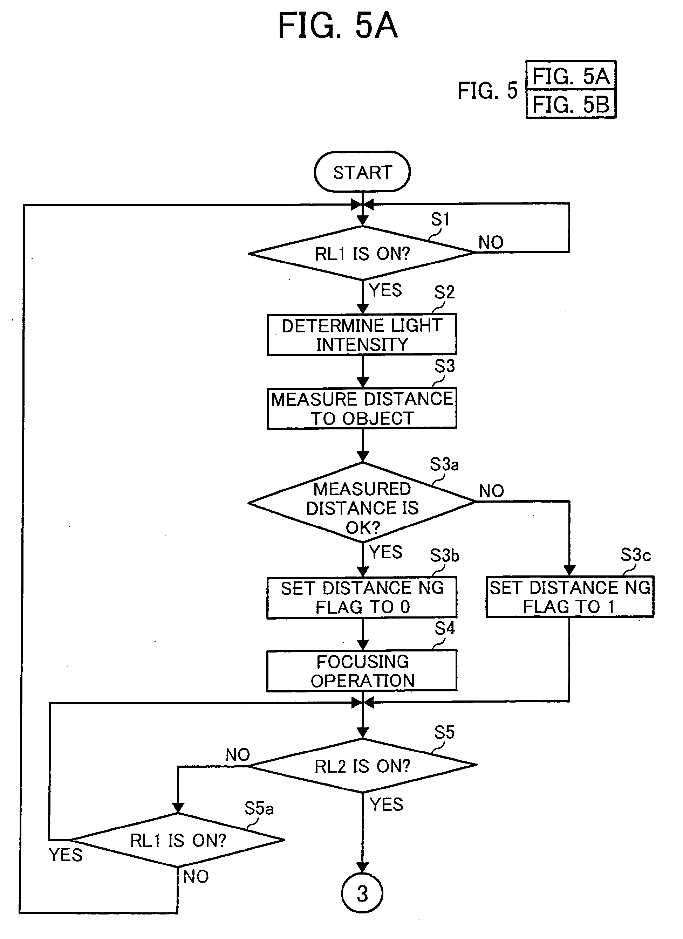

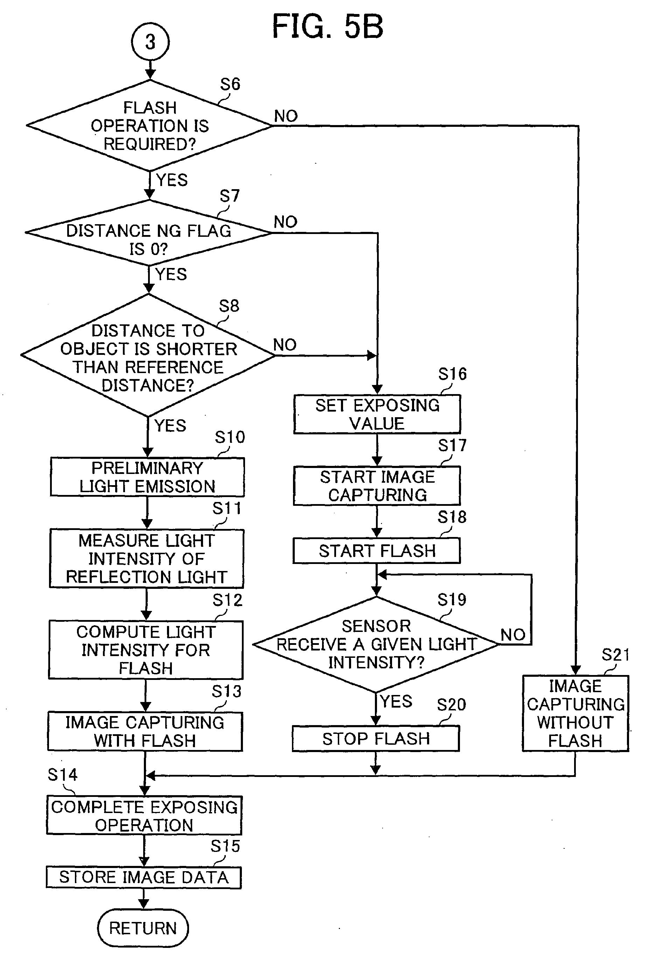

FIG. 5 (comprising FIGs. 5A and 5B) is another flow chart for explaining a process of image capturing operation according to an example embodiment.

Different from the control process shown in FIG. 3, the control process shown in FIG. 5 may add some steps when a distance measured by the ranging unit 5 cannot be used for an image capturing operation.

The control process shown in FIG. 5 may have steps S1 to S6 as similar to the control process shown in FIG. 3.

At step S3a, the controller may judge whether a distance measured by the ranging unit 5 is within an allowable value or range.

If the controlling unit judges that a measured distance is within an allowable value or range at step S3a (i.e., measured distance can be used for image capturing), the controlling unit sets a distance NG flag to "0" at step S3b, and forwards the process to step S4 for focusing operation.

If the controller judges that a measured distance is not within an allowable value or range at step S3a (i.e., measured distance cannot be used not for image capturing), the controller sets a distance NG (not good) flag to "1" at step S3c, and forwards the process to step 5 and wait the signal RL2.

The distance NG flag is set to "0" if a measured distance is within an allowable value or range, and is set to "1" if a measured distance is not within an allowable value or range or if a measured distance cannot be used for image capturing.

Under some conditions, the ranging unit 5 cannot measure a distance to an object. For example, if an object environment is too dark (e.g., night scene), the ranging unit 5 cannot measure a distance to an object correctly.

At step S5, the controlling unit judges whether the signal RL2 is activated.

If the controlling unit judges that the signal RL2 is activated, the controlling unit judges whether a flash operation is required for capturing an image at step S6. In other words, the controlling unit judges whether an exposure level of the object is enough for capturing an image at step S6.

If the controlling unit judges that a flash operation is not required at step S6, the controlling unit conducts an image capture operation without using the light flash emitting unit 3 at step S21, stores a captured image data to a memory at step S15, and completes the image capture operation in a similar manner to the control process shown in FIG. 3.

If the controlling unit judges that a flash operation is required at step 6, the controlling unit judges whether a distance measurement NG flag is set to "0" at step 7.

If the controlling unit judges that the distance measurement NG flag is "1," which means the measured distance is NG at step S7, which means the measured distance is NG (not good), the controlling unit conducts steps S16 to S20 in a similar manner to the control process shown in FIG. 3 with an autostrobo method.

If the controlling unit judges that the distance measurement NG flag is "0" at step S7, which means the measured distance is OK, the controlling unit judges whether a distance to the object is shorter or longer than a reference distance value at step S8.

If the controlling unit judges that the distance to the object is longer than the reference distance value at step S8, the controlling unit conducts an image capture operation using the light flash emitting unit 3 in steps S16 to S18 in a similar manner to the control process shown in FIG. 3 with an autostrobo method.

If the controlling unit judges that the distance to the object is shorter than the reference distance value at step S8, the controlling unit conducts steps S10 to S15 in a similar manner to the control process shown in FIG. 3 with a preliminary light emission method.

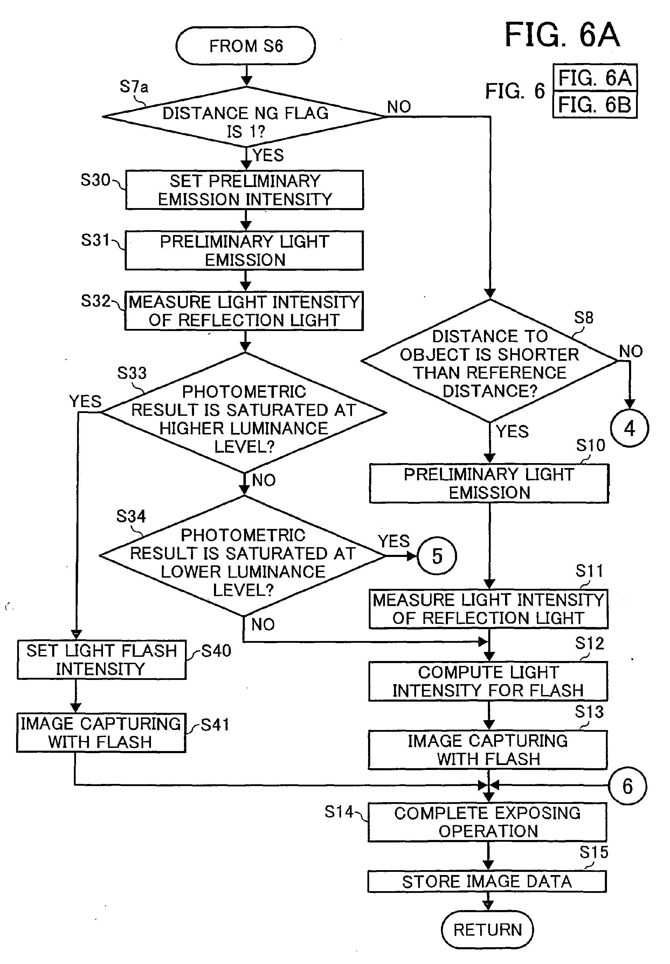

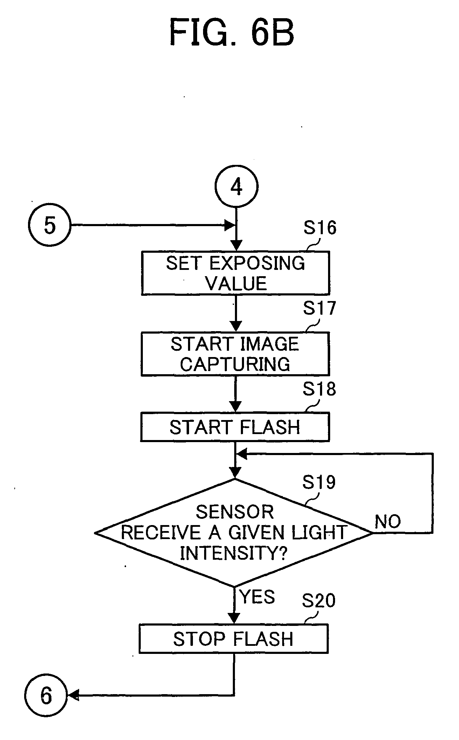

FIG. 6 is another flow chart for explaining a process of image capture operation according to an exemplary embodiment.

Although not shown in FIG. 6, the control process shown in FIG. 6 may include steps S1 to S6 in a similar manner to the control process shown in FIG. 3.

The control process shown in FIG. 6 shows a process that the controlling unit judges that a flash operation is required at step S6 (Yes at step S6).

If the controlling unit judges that a distance NG flag is "0" (i.e., measured distance is within an allowable value or range) at step S7a, the controlling unit conducts steps S8 and subsequent steps.

If the controlling unit judges that a distance NG flag is "1" (i.e., a measured distance is not within an allowable value or range) at step S7a, the controlling unit sets an emission intensity of preliminary light emission at step S30.

At step S31, the controlling unit conducts a projection of a preliminary light emission to an object.

At step S32, the controlling unit computes a light intensity of reflection light reflected from the object to obtain a photometric result.

At step S33, the controlling unit judges whether the photometric result at step S32 is saturated at a relatively higher luminance level (i.e., overflowed).

If the controlling unit judges that the photometric result is saturated (i.e., overflowed) at step S33, the controlling unit may set an emission intensity of the light flash at step S40 to a value smaller than the emission intensity of the preliminary light emission used at step S30, and forwards the process to step S41. At step S41, the controlling unit conducts an image capturing operation with a flash operation.

If the controlling unit judges that a photometric result at step S32 is not saturated at a relatively higher luminance level at step S33, the controlling unit judges whether a photometric result is saturated at a relatively lower luminance level at step S34.

If the controlling unit judges that a photometric result at step S32 is saturated at a relatively lower luminance level at step S34, the control process goes to steps S16 to S20 to be conducted by an autostrobo method.

If the controlling unit judges that a photometric result at step S32 is not saturated at a relatively lower luminance level at step S34, the control process goes to step S12.

At step S12, the controlling unit computes an emission intensity of the light flash to be emitted by the light flash emitting unit 3 with a preliminary light emission method.

After step S12, the controlling unit forwards the process to steps S13 to S15 in a similar manner to the previously explained control process.

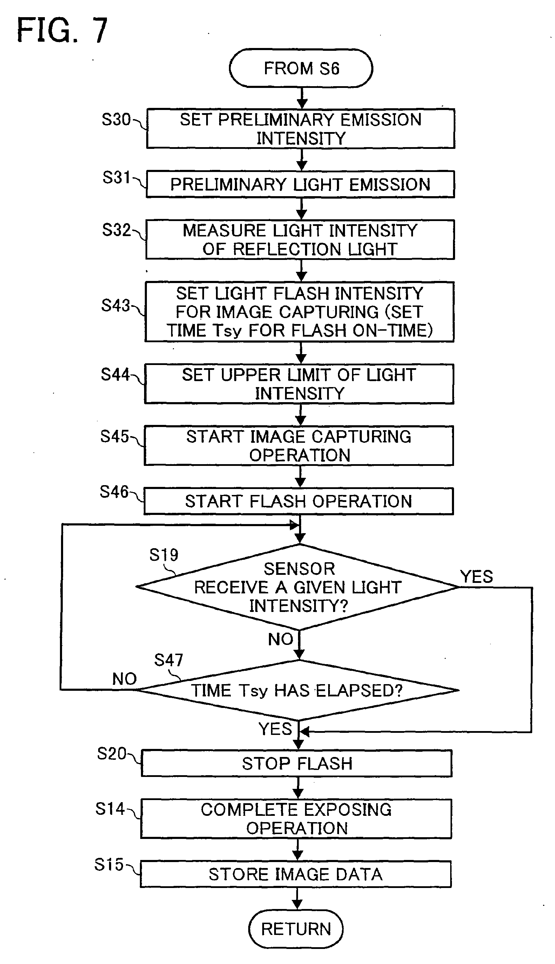

FIG. 7 is another flow chart for explaining a process of image capturing operation according to an exemplary embodiment.

Although not shown in FIG. 7, the control process shown in FIG. 7 may include steps S1 to S6 in a similar manner to the control process shown in FIG. 3.

The control process shown in FIG. 7 shows a process that the controlling unit judges that a flash operation is required at step S6 (Yes at step S6).

In a case of flash operation is required (Yes at step S6), the controlling unit conducts an exposure control with a first lighting controller using preliminary light emission method.

Specifically, the controlling unit sets an emission intensity for preliminary light emission at step S30.

At step S31, the controlling unit effects of a preliminary light emission to an object.

At step S32, the controlling unit computes a light intensity of reflection light reflected from the object to obtain a photometric result.

At step S43, the controlling unit determines and set an emission intensity of a light flash required for an image capturing operation based on the photometric result at step S32.

Specifically, at step 43, the controlling unit determines and sets a lighting time Tsy, used for controlling an ON-time of the light flash emitting unit 3. The controlling unit conducts step S43 for the first lighting controller.

Then, the controlling unit may set an exposure level for an autostrobo method controlled by the second lighting controller.

Specifically, the controlling unit sets an upper limit of light intensity to be received by an exposure sensor 6 at step S44.

The controlling unit stops a flash operation when the exposure sensor 6 receives a given amount of light intensity of reflection light from an object during an image capturing operation.

For example, the controlling unit may set a reference voltage to a comparator to check whether the exposure sensor 6 received a given amount of light intensity of reflection light from the object, wherein such process may be controlled with the second lighting controller.

At steps S45 and S46, the controlling unit starts an image capture operation with a flash operation.

At step S19, the controlling unit checks whether the exposure sensor 6 has received a given amount of reflection light from the object.

At step S47, the controlling unit checks whether the lighting time Tsy has elapsed from the start timing of flash operation.

As shown in FIG. 7, the controlling unit stops light emitting at step S20 with a Yes-signal coming from any one of steps S49 and S47, whichever comes first.

In the above explained control process according to exemplary embodiment, the controlling unit may operate or activate the first lighting controller and second lighting controller concurrently without setting a priority level each other.

The controlling unit may not set any priority level for such first and second lighting controller, and thereby the first and second lighting controller may be used in an equal manner.

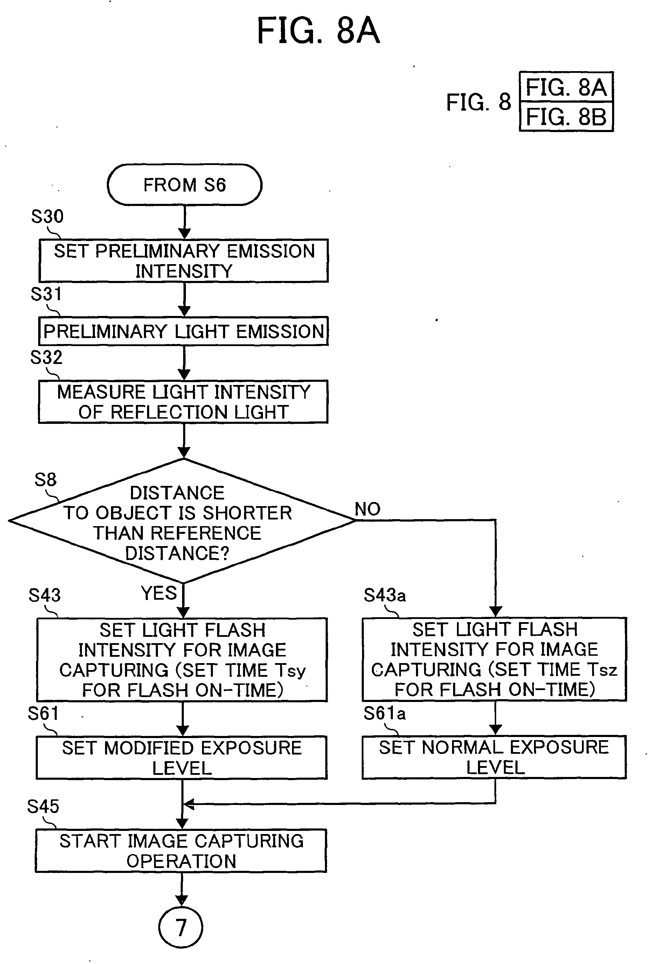

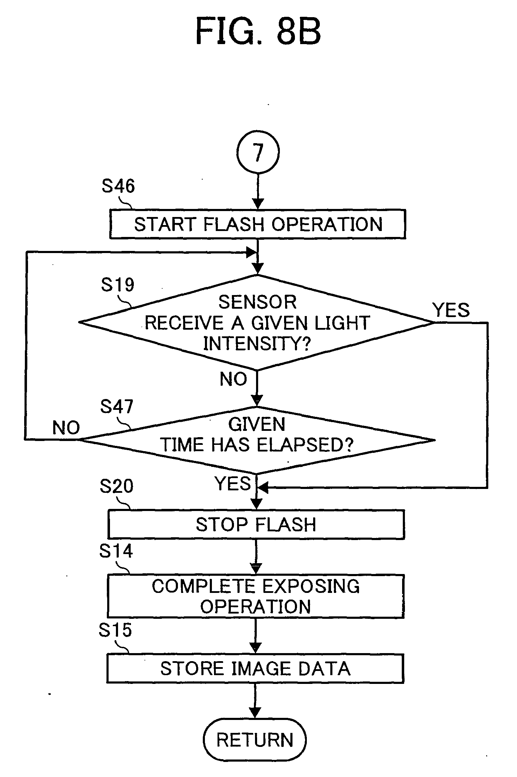

However, in another control method according to an exemplary embodiment shown in FIG. 8, the controlling unit may prioritize any one of first and second lighting controller depending on an image capturing condition while concurrently operating the first and second lighting controller.

FIG. 8 (comprising FIGs. 8A and 8B) is another flow chart for explaining a process of image capture operation according to an exemplary embodiment.

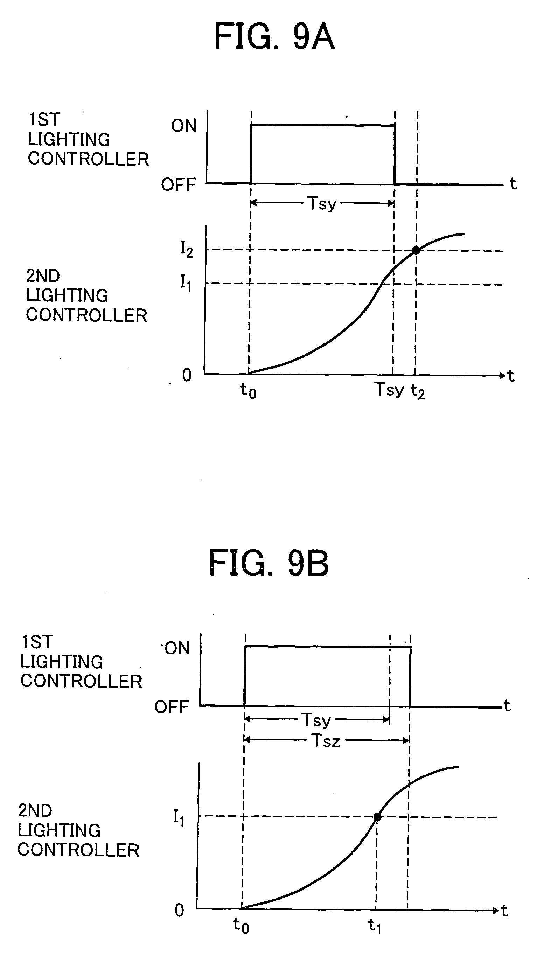

FIG. 9 (comprising FIGs. 9A and 9B) shows a schematic lighting pattern of a light flash for the image capturing apparatus 1, in which a priority level is set for the controlling methods.

In FIG. 9A, the controlling unit prioritizes a first lighting controller using preliminary light emission method. In FIG. 9B, the controlling unit prioritizes a second lighting controller using autostrobo method.

Different from FIG. 7, the control process shown in FIG. 8 prioritizes either one of the first and second lighting controllers.

Specifically, the controlling unit prioritizes either one of the first and second lighting controllers for capturing an object distanced from the image capturing apparatus 1 in a shorter or longer range.

As shown in FIGs. 8 and 9, the controlling unit sets a given exposure level for each of the first and second lighting controller to prioritize one of the first and second lighting controllers when conducting an image capture operation.

At step S8 shown in FIG. 8, the controlling unit judges whether a distance to the object is shorter than a given reference distance.

If the controlling unit judges that the object is at a shorter distance at step S8, the controlling unit prioritizes the first lighting controller using preliminary light emission method, and forwards the process to step S43.

At step S43, the controlling unit determines and sets a light flash intensity required for an image capture operation with a flash operation. Specifically, at step 43, the controlling unit determines and sets a lighting time Tsy to control an ON-time of flash light emitting unit 3 to obtain a light flash intensity to be used for image capture.

At step S61, the controlling unit adjusts an exposure level of the second lighting controller for autostrobo method. At step S61, the controlling unit sets a given exposure level for the second lighting controller.

For example, the controlling unit may set an exposure level $I_1$ and an exposure level $I_2$ for the second lighting controller as shown in FIG. 9A.

The exposure level $I_1$ may be a normal value determined as below explained. The exposure level $I_2$ may be a modified value, set greater than the level $I_1$ for a given value. For example, the exposure level $I_2$ may be greater than the exposure level $I_1$ for 1EV (exposure value).

If the controlling unit judges that the object is at a longer distance at step S8, the controlling unit prioritizes the second lighting controller using autostrobo method, and forwards the process to step S43a.

At step S43a, the controlling unit adjusts an exposure level of the first lighting controller for preliminary light emission method.

For example, the controlling unit may set the lighting time Tsy and a lighting time Tsz to set an exposure level of the first lighting controller as shown in FIG. 9B.

The lighting time Tsy may be a value determined from a photometric result obtained at step S32. The lighting time Tsz may be a modified value, set greater than the lighting time Tsy for a given value. For example, the lighting time Tsz may be greater than the lighting time Tsy for 1EV (exposure value).

At step S61a, the controlling unit sets a given exposure level for the second lighting controller. For example, the controlling unit may set an exposure level $I_1$ for the second lighting controller as shown in FIG. 9B. The exposure level $I_1$ may be a normal value determined as below explained.

After step S61 or S61a, the control process shown in FIG. 8 may have similar steps shown in FIG. 7 such as S45 to S15.

If the controlling unit does not set the above-mentioned difference for the two controllers, the controlling unit may receive a signal indicating a completion of the flash operation from each of the two controllers at substantially the same time.

In one exemplary control process shown in FIG. 8, the controlling unit may set the above-mentioned difference for the two controllers (e.g., +1EV condition for one of controllers), and thereby the controlling unit may receive signals from the two controllers indicating that a flash operation is completed at different timing, in which a signal indicating a completion of flash operation for the one method may be generated at an earlier timing than a signal indicating a completion of flash operation for another method.

Accordingly, in the control process according to an examplary embodiment shown in FIG. 8, one method may be prioritized over the other method.

Furthermore, a step of macro mode judgment shown in FIG. 4 may be included in the control processes shown in FIG. 5 and other subsequent drawings. For example, the step of macro mode judgment may replace the step of distance judgment, or the step of macro mode judgment may be configured before the step of distance judgment. Such a modified configuration can be selected, as required.

In FIG. 9A, the controlling unit may set the lighting time Tsy as ON-time required for flash operation by the first lighting controller. In other words, the first lighting controller may control an emission of a light flash with the lighting time Tsy, which may be determined using the photometric result obtained by preliminary light emission. As shown in FIG. 9A, a light flash having a pulse shape may be emitted during the lighting time Tsy.

On one hand, the second lighting controller may compute an exposure level for autostrobo method based on a F-number of lens and a sensitivity of the CCD 101.

As above mentioned, the controlling unit may set the exposure level $I_1$ and $I_2$ for the second lighting controller as shown in FIG. 9A. The exposure level $I_1$ may be a value determined based on a F-number of lens and a sensitivity of the CCD 101.

The exposure level $I_2$ may be a modified value, set greater than the level $I_1$ for a given value. For example, the level $I_2$, corresponded at time $t_2$, may be greater than the level $I_1$ for 1EV (exposure value). The exposure level $I_2$ may be set as threshold exposure value, for example.

The controlling unit may have an integrating circuit to integrate a light intensity of reflection light reflected from an object.

The integrating circuit may be used to determine whether an actual exposure level may become greater than the exposure level $I_2$.

As shown in FIG. 7, the controlling unit may stop an emission of a light flash at the timing of time Tsy or time $t_2$, whichever comes earlier.

In FIG. 9B, based on the lighting time Tsy, the controlling unit may set the lighting time Tsz as flash time for a flash operation by the first lighting controller. In other words, the first lighting controller may emit a light flash for the lighting time Tsz.

As shown in FIG. 9B, during the lighting time Tsz, a light flash having a pulse shape may be emitted. The light flash time Tsz may include the light flash time Tsy and a time corresponding to an additional 1EV.

On one hand, the second lighting controller may compute an exposure level for autostrobo method based on a F-number of lens and a sensitivity of the CCD 101 as exposure level $I_1$ shown in FIG. 9B.

The controlling unit may set the exposure level $I_1$, corresponded at time $t_1$, for the second lighting controller as threshold exposure value.

The controlling unit may have an integrating circuit to integrate a light intensity of reflection light reflecting from an object.

The integrating circuit may be used to determine whether an actual exposure level becomes greater than the exposure level $I_1$.

As shown in FIG. 8, the controlling unit may stop an emission of the light flash at a timing of time Tsz or time t1, whichever comes earlier.

FIGs. 8 and 9 show an example control process, in which an exposure operation may be conducted with setting a priority level for the first and second lighting controller.

In some cases, an exposure operation in the control process shown in the above may not be effectively conducted due to a contaminated condition of an optical window of the exposure sensor 6, for example.

If an optical window of the exposure sensor 6 for second lighting controller using autostrobo method is contaminated, the integrating circuit may not be able to detect a light intensity correctly.

For example, the integrating circuit may incorrectly integrate light intensity due to such contamination, and thereby an integrated value of the integrating circuit may not increase even though a refection light is actually reflecting from the object.

In such condition, an exposure operation or flash operation may be continued even if an actual light intensity for exposure operation may exceed an optimal exposure value, by which an extreme overexposure may occur.

However, in the above described exemplary embodiment, the first and second lighting controller may be activated in a concurrent manner with setting a priority level each other.

Accordingly, even if the above-mentioned contamination occurs to the second lighting controller, the first lighting controller may function as a backup lighting controller having a given exposure condition (e.g., +1EV condition).

With such dual controlling configuration, the image capturing apparatus 1 may capture an image of object without a substantial failing condition on a captured image.

The above-mentioned additional exposure value of +1EV may be changed to any value depending on a contrast of object to be captured.

For example, if an object having a relatively low contrast is to be captured by the image capturing apparatus 1, an exposure level may be increased to a given value (e.g., 2 EV).

In case of capturing an image of object having a low contrast, an increase of exposure level may not cause an overexposed condition, and thereby the image capturing apparatus 1 may capture an image having a good quality.

In FIGs. 7 to 9, the first lighting controller may employ a preliminary light emission method. However, the first lighting controller can employ a flashmatic method instead of preliminary light emission method.

In case of flashmatic method, a control process may be conducted in a similar manner except that the lighting time Tsy may be determined based on a distance to an object instead of the above-mentioned photometric result of the preliminary light emission.

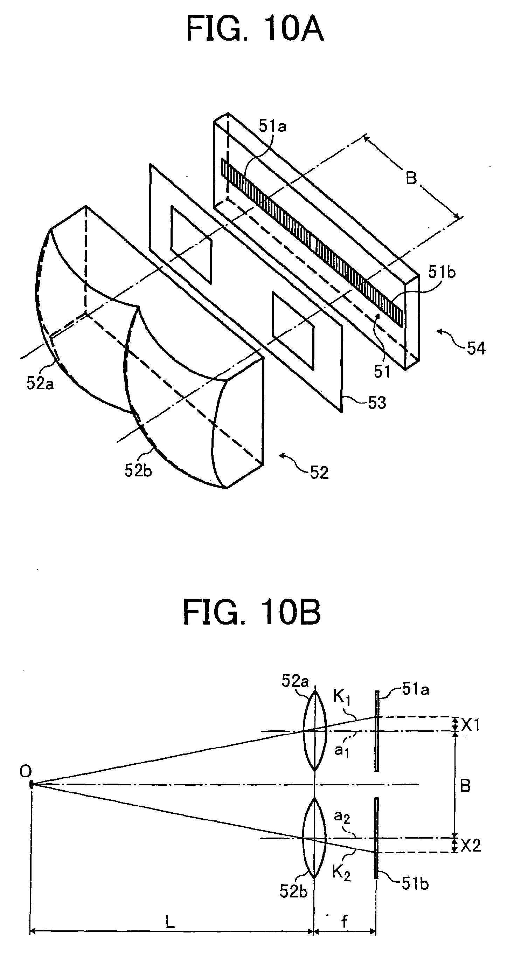

FIG. 10 is a schematic view of the ranging unit 5 according to an exemplary embodiment. FIG. 10A is a schematic configuration of the ranging unit 5 having a measuring element. FIG. 10B is a schematic view for explaining a measurement of focus distance.

FIG. 10A shows the ranging unit 5 having a light sensor 51, a lens 52, an aperture diaphragm 53, and a measuring control unit 54.

The light sensor 51 receives a reflection light, reflected from the object O. The lens 52 focuses a reflection light, reflected from the object O on the light sensor 51. The aperture diaphragm 53 limits the amount of light which enters the light sensor 51. The measuring control unit 54 may be formed on a circuit board, which may be integrated with the light sensor 51.

As shown in FIGs. 10A and 10B, the light sensor 51 includes a first light sensor 51a and a second light sensor 51b, which are separated from each other by a distance B, wherein the distance B is a distance between the center of first light sensor 51a and the center of second light sensor 51b.

The first light sensor 51a and second light sensor 51b have a plurality of light receiving elements arranged in a row as shown in FIG. 10A. The first light sensor 51a and second light sensor 51b may have an equal number of light receiving elements; for example.

The lens 52 includes a first lens 52a and a second lens 52b, corresponding to the first light sensor 51a and the second light sensor 51, respectively.

Furthermore, the measuring control unit 54 stores a control program for accumulating or integrating the intensity of light received by the light receiving element of the light sensor 51, and for reading an accumulated or integrated light intensity.

As shown in FIG. 10B, the distance between the lens 52 and the object O is L, the distance between the lens 52 and light sensor 51 is f, and the distance between the first lens 52a (or first light sensor 51a) and the second lens 52b (or second light sensor 51b) is B.

As shown in FIG. 10B, light rays K1 and K2, which enter the first light sensor 51a and second light sensor 51b respectively, are at an angle with respect to an axis lines a1 and a2 of the first lens 52a and the second lens 52b. The axis lines a1 and a2 are aligned to a parallel light beam, which may come from a point at infinity.

As shown in FIG. 10B, a deviation amount X1 and X2 for the light K1 and K2 may be observed for the first light sensor 51a and second light sensor 51b, respectively.

Under such condition, the distance L between the object and lens 52 may be computed with the following formula (1) with a distance-measuring method using the principle of trigonometry.

$$L = B.f/(X1+X2) \quad (1)$$

In such formula (1), the distances B and f may be set in advance based on a design concept of the image capturing apparatus 1, for example.

A CPU (central processing unit) of the controlling unit may read an integrated value of light intensity received by the light sensor 51, and may compute "X1" and "X2" based on the read received-light intensity. The CPU may assign such computed "X1+X2" to the formula (1) to compute the distance L between the object O and lens 52.

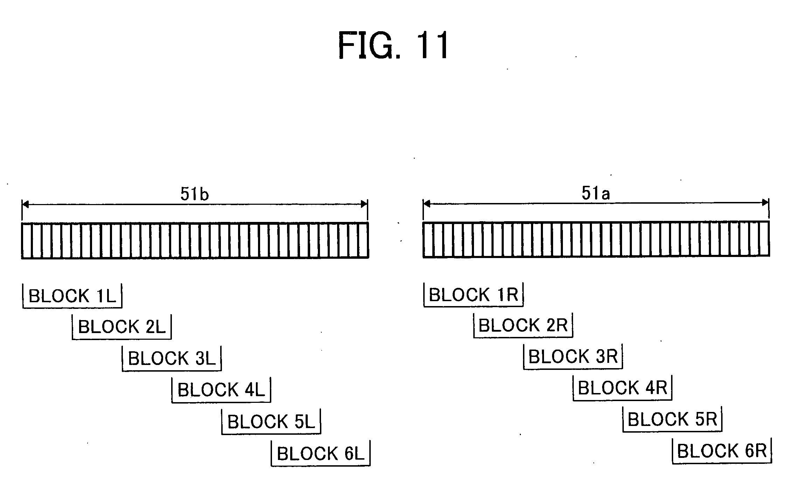

FIG. 11 is a schematic view of the light sensor 51 having the light sensors 51a and 51b. As above-mentioned, each of the light sensors 51a and 51b may have an equal number of light receiving elements.

Such plurality of light receiving elements may be grouped in several blocks as shown in FIG. 11 by grouping a given number of light receiving elements as one block. Accordingly, such plurality of light receiving elements may be grouped into a plurality of light-receiving blocks as shown in FIG. 11.

As shown in FIG. 11, some light receiving elements may be included in both one light-receiving block and an adjacent light-receiving block, for example.

Each of the light sensors 51a and 51b may include 130 light receiving elements, and one light-receiving block may be configured with thirty (30) light receiving elements, for example.

Such light sensors 51a and 51b may have light-receiving blocks 1 to 6 (e.g., block 1L to 6L, block 1R to 6R) as shown in FIG. 11.

The light-receiving block 1 may include a first (1st) to thirtieth (30th) light receiving element. The light-receiving block 2 may include a twenty-first (21st) to fiftieth (50th) light receiving element. The light-receiving block 3 may include a forty-first (41st) to seventieth (70th) light receiving element. The light-receiving block 4 may include a sixty-first (61st) to ninetieth (90th) light receiving element. The light-receiving block 5 may include an eighty-first (81st) to one hundred tenth (110th) light receiving element. The light-receiving block 6 may include a one hundred first (101st) to one hundred thirtieth (130th).

In such a case, each of light-receiving blocks 1 to 6 may have ten (10) light receiving elements overlapping with the adjacent light-receiving block. FIG. 11 schematically shows such overlapping condition of light receiving elements. As shown in FIG. 11, the light sensors 51a and 51b may have a same number of light-receiving blocks, for example.

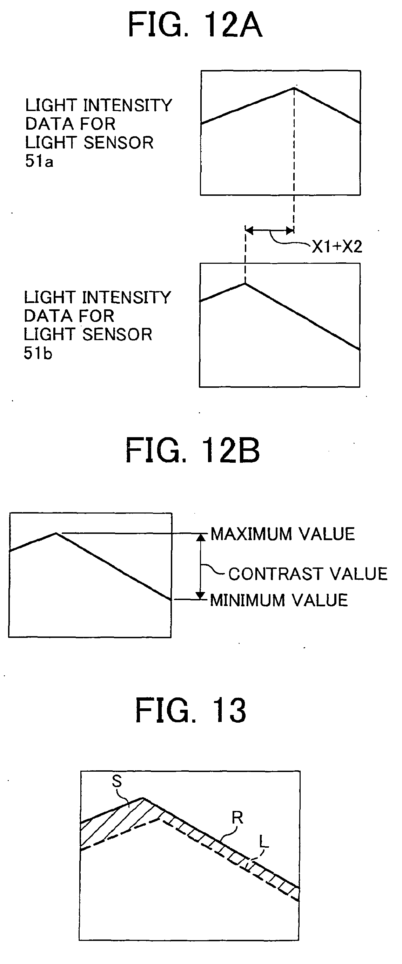

FIG. 12 is a schematic profile of light intensity of light received by the light-receiving blocks or light-receiving elements.

FIG. 12A is a schematic profile of light intensity of light received by the light-receiving blocks in each of the light sensor 51a and 51b, in which a deviation of light intensity profile of the light sensor 51a and 51b is explained.

FIG. 12B is a schematic profile of light intensity of light received by the light-receiving blocks in the light sensor 51a or 51b, in which a contrast value is explained.

In FIG. 12, the vertical axis represents a light intensity of light, received by the light receiving element in the light-receiving block, and the horizontal axis represents a position of each light receiving element.

As shown in FIG. 12A, the light-receiving blocks (or light receiving elements) may have a light intensity profile data.

In a control process according to an example embodiment, by comparing such light intensity profile for in the light sensor 51a and 51b, a deviation of light intensity profile of the received light may be determined to compute "X1+X2."

FIG. 12A shows an example case, in which each light intensity profile, obtained by each of the light sensor 51a and 51b may have one peak (or local maximal value), for example.

If such profile has a plurality of peaks having little difference in height, the controlling unit cannot match a peak detected by the light sensor 51a and a corresponding peak detected by the light sensor 51b. In such a condition, the controlling unit cannot measure a distance to the object O and sets "1" for a distance measurement NG flag.

FIG. 12B shows a contrast value, which is a difference of the maximum value and minimum value of the light intensity profile of light data received by the light-receiving blocks in each of the light sensor 51a or 51b.

The controlling unit may judge whether the contrast value is smaller or larger than a reference value.

If the contrast value is smaller than the reference value, a contrast control unit judges that an image capturing condition may not be in a good condition.

Such contrast checking process using the reference value may be conducted for the light-receiving blocks for the light sensors 51a and 51b.

If at least one light-receiving block has a contrast value lower than the reference value, the controlling unit may judge that a measured distance may have a relatively low reliability. In such a case, the controlling unit may determine that a distance measurement is not possible, and may not use such measured distance as image capturing distance.

Such lower contrast value may be detected when the image capturing apparatus 1 is directed to a surface having little contrast such as plane face having only one color, for example.

The above mentioned reference value may be set to any value based on reliability experiments conducted under an actual use condition.

FIG. 13 is a schematic profile of light intensity of light received by the light-receiving blocks in each of the light sensors 51a and 51b, in which a difference of light intensity profile of the light sensor 51a and 51b is explained.

The vertical axis and horizontal axis in FIG. 13 are similar to the vertical axis and horizontal axis of FIG. 12.

Ideally, light data received by the light-receiving block of light sensor 51a and light data received by the light-receiving block of light sensor 51b have a profile having a similar and overlapping shape.

However, such two profiles may have a difference each other depending on a condition of reflection light reflected from the object O.

In view of such condition, the controlling unit may compute a total sum of light intensity of light received by the light receiving elements in the light-receiving block for each of the light sensors 51a and 52b.

The controlling unit may compare computed total sum of light intensity for the light sensors 51a and 52b, by which the controlling unit may judge a difference of images received by the light sensors 51a and 52b.

FIG. 13 shows a solid line R representing a light intensity profile (or total sum of light data) obtained by the light sensor 51a and a dashed line L representing a light intensity profile (or total sum of light data) obtained by the light sensor 51b.

As shown in FIG. 13, an area S between the solid line R and dashed line L may become a difference between a total sum of light intensity obtained by the light sensors 51a and 51b.

If such difference between the light sensors 51a and 51b becomes greater than a given value, the controlling unit may judge that the light sensors 51a and 51b may not correctly detect an image of object O.

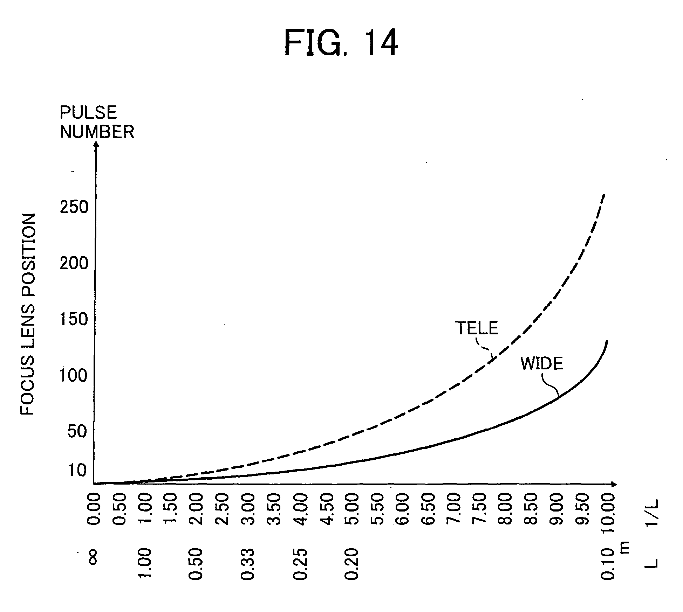

FIG. 14 is an example graph showing a relationship between a focus distance and a focus lens position.

The horizontal axis in FIG. 14 represents a scale of focus distance with an equally calibrated scale of inverse number, in which the lower numerical value represents a focus distance (m).

The vertical axis in FIG. 14 represents a pulse number of motor, which corresponds to a lens position in the lens barrel unit 7.

The controlling unit may compute output signals of the CCD 101 (used as image pickup device) while driving the lens, and may compute a distance to the object O based on position of the lens.

A method of converting a position of lens to a distance to the object O may include: 1) a method of computation using a relationship of the inverse number of focus distance and focus lens position; 2) a method of storing a conversion table in a ROM storing relationships of the inverse number of focus distance in and focus lens position, for example.

In an examplary embodiment, a present position of the lens may be detected as below.

For example, the image capturing apparatus 1 may have a pulse motor to drive the lens. When such image capturing apparatus 1 is activated, a reset operation is conducted to detect and set a reference position of the lens. Then, a present position of the lens may be detected based on pulse number information used for moving the lens.

In an examplary embodiment, the controlling unit may judge whether a distance value measured by the ranging unit 5 is OK or NG (not good).

Specifically, the controlling unit may judge whether a measured distance value is within a given range, and may judge whether such obtained result may have a relatively high or low reliability.

Accordingly, as shown in FIG. 5, if the controlling unit judges that a measured distance is NG, the controlling unit sets an emission intensity of preliminary light emission based on a measurement result obtained by the ranging unit 5 and other conditions such as F-number of lens and sensitivity of the CCD 101.

Furthermore, if a measurement of distance is substantially incapable, the controlling unit may set an emission intensity of preliminary light emission as below, for example. Such measurement incapable condition may occur when an environment has little light such as a night scene having no light source.

Assume that an image capturing apparatus 1 has a distance range of 0.25 m to 4 m, in which an exposure level is controlled to an optimal exposure based on F-number of lens and a sensitivity of the CCD 101.

A light intensity of a light flash required for an optimal exposure may become proportional to a squared value of distance to the object O.

A dynamic range for brightness of the CCD 101 may be set to 4EV ($2^4$ = 16 magnification), for example.

A light intensity range required for an image capturing may become 8EV, which is calculated from $(4/0.25)^2 = 256 = 2^8$.

Preferable emission intensity for preliminary light emission may be set to a distance of 1 m, wherein an exposure level at 1 m may correspond to a center value of the above-mentioned range of 8 EV. Under such condition, a measurement of distance to an object may be conducted by adjusting an exposure level within a $\pm$2EV range, for example.

With such configuration, the controlling unit can compute a light intensity of a light flash required for an exposing the object O, at a distance from the image capturing apparatus 1 of 0.5 m to 2 m.

Because the image capturing apparatus 1 captures the object O with such computed light flash intensity, the image capturing apparatus 1 may favorably expose the object O at 0.5 m to 2 m, by which the image capturing apparatus 1 may capture an image at a favorable quality.

Furthermore, if the controlling unit cannot compute a light intensity during a preliminary light emission due to an overexposure (e.g., when 0.5 m or less), a computation similar to the above may be conducted to set a light intensity of a light flash for an object at 0.35 m with a favorable level, by which an object at 0.25 m to 0.5 m may be captured within an exposure level of $\pm$1EV range, and a prefered image can be captured.

Similarly, if the controlling unit cannot compute a light intensity during a preliminary light emission due to an underexposure (e.g., when 2 m or more), a computation similar to the above may be conducted to set a light intensity of flash light for an object at 2.8 m with a favorable level, by which an object at 2 m to 4 m may be captured within an exposure level of $\pm$1EV range, and a prefered image can be captured.

In an example embodiment, lower emission intensity for preliminary light emission may be preferable from a viewpoint of saving light emitting energy for exposure operation.

Accordingly, a relatively smaller F-number of lens and a relatively higher sensitivity of image pickup device (e.g., CCD) may be preferable when measuring a distance to an object with a preliminary light emission.

As above discussed, even if a distance measuring is incapable under a light-flashed condition, a favorable exposure may be obtained at a higher probability in an example embodiment.

As above-discussed, the image capturing apparatus according to an example embodiment may employ a set of preliminary light emission method and autostrobo method or a set of flashmatic method and autostrobo method for controlling a flashing operation, wherein such methods may be selectively used depending on an image capturing condition such as shooting distance and macro mode.

Because such image capturing apparatus may conduct an exposure control with a plurality of methods, such image capturing apparatus may capture an image of object at a shorter to longer distance while controlling an exposure level at a preferable level at a shorter to longer distance, which may be preferable for capturing an image of object in a wider range in one image capturing operation, which may be conducted with a flash operation.

Furthermore, such image capturing apparatus may reduce a possibility of failed image capturing even if one of the control methods may not be conducted precisely because other exposure control method may function as backup controlling method.

Numerous additional modifications and variations are possible in light of the above teachings. It is therefore to be understood that within the scope of the appended claims, the disclosure of the present invention may be practiced otherwise than as specifically described herein.

This application claims priority from Japanese patent application No. 2006-136928 filed on May 16, 2006 in the Japan Patent Office, the entire contents of which is hereby incorporated by reference herein.

**Claims**

1. An image capture apparatus for capturing an image of an object at a distance from the image capturing apparatus, the apparatus comprising:

   a lens configured to form an optical image of the object;
   a photoelectric converting device configured to receive and convert the focused optical image to an electric signal;
   a ranging unit configured to measure a distance between the lens and the object;
   a lighting unit configured to emit a light flash when capturing the image of the object;
   a first light controller configured to instruct a projection of a preliminary light from the lighting unit to the object before conducting an image capturing operation, to compute an emission intensity of a light flash required for capturing the image of the object based on the electric signal output by the photoelectric converting device in response to a reflection light reflected from the object in response to the preliminary light, and to emit a first light flash having the computed emission intensity for image capturing operation;

   a second light controller configured to instruct a projection of a second light flash from the lighting unit to the object when capturing the image of the object, to receive a reflection light reflected from the object with a light receiver provided for the second light controller, and to stop the projection of the second light flash when the light receiver receives a given amount of light intensity of the reflection light; and

   a controlling unit configured either to select one of the first and second light controller, depending on an image capturing condition, to conduct a flash operation for image capturing operation, or to concurrently use the first and second light controllers to conduct a flash operation for image capturing operation.

2. An image capture apparatus according to claim 1, wherein the preliminary light has an emission intensity, determined by at least one of an object distance measured by the ranging unit, a sensitivity of photoelectric converting device, and a F-number of the lens, wherein the object distance is a distance between the object and the lens.

3. An image capture apparatus according to claim 1 or 2, wherein the image capturing condition includes a reference distance set for image capturing operation, which is determined by at least one of a sensitivity of the photoelectric converting device, a F-number of the lens, and a focal point distance of the lens.

4. An image capture apparatus according to any one of claims 1 to 3, wherein the controlling unit selects the first lighting controller to control an emission intensity of the first light flash when an object distance measured by the ranging unit is shorter than the reference distance, and the controlling unit selects the second lighting controller to control an emission intensity of the second light flash when an object distance measured by the ranging unit is longer than the reference distance.

5. An image capture apparatus according to any one of claims 1 to 3, further comprising means for enabling user selection of one of the first and second light controllers before conducting an image capture operation.

6. An image capture apparatus according to any one of claims 1 to 5, wherein said apparatus further comprises means for selection of a macro mode operation, and when the macro mode operation is selected, the controlling unit is arranged to select the first light controller to control an emission intensity of the first light flash while disregarding an object distance measured by the ranging unit.

7. An image capture apparatus according to any one of claims 1 to 6, wherein the controlling unit is arranged to select the second light controller to control a flash operation when an object distance measured by the ranging unit has a low reliability or when an object distance measurement by the ranging unit is not possible.

8. An image capture apparatus according to any one of claims 1 to 7, wherein when an object distance measured by the ranging unit has a lower reliability or when an object distance measurement by the ranging unit is not possible, the controlling unit is arranged to:

   instruct a projection of a preliminary light from the lighting unit to the object before conducting an image capturing operation,
   to compute an output signal of the photoelectric converting device, which receives a reflection light reflected from the object,
   to conduct an image capturing operation using the first light controller to conduct a flash operation with a light flash having the computed emission intensity when the computed emission intensity is within a given range,
   to adjust an emission intensity of a light flash for the flash operation to a value smaller than an emission intensity of the preliminary light when a photometric result corresponding the output signal of the photoelectric converting device is saturated at a relatively high luminance level, and
   to use the second light controller to control a light flash for the flash operation when the photometric result corresponding to the output signal of the photoelectric converting device is saturated at relatively low luminance level.

9. An image capture apparatus according to any one of the preceding claims, wherein the first light controller is used to determine an emission intensity of a light flash required for the image capture operation based on a F-number of the lens, a object distance between the object and the lens, and a sensitivity of the photoelectric converting device.

10. An image capture apparatus according to any one of the preceding claims, wherein the controlling unit sets a different flash condition for each of the first and second light controllers to set a flash priority to either one of the first and second light controllers, wherein the flash condition includes an exposure level set for the first and second light controllers.

11. An image capture apparatus according to claim 10, wherein the flash condition for the first and second light controllers is changeable depending on an image capture condition.

12. An image capture apparatus according to claim 10 or 11, wherein when the ranging unit measures a distance to the object shorter than a reference distance, the first light controller is prioritized over the second light controller, and when the ranging unit measures a distance longer than a reference distance, the second light controller is prioritized over the first light controller for controlling an emission intensity of the light flash.

13. An image capture apparatus according to claim 12, wherein the reference distance is determined by at least one of a sensitivity of the photoelectric converting device, a F-number of the lens, and a focal point distance of the lens.

14. A method of capturing an image of an object distanced from an image capturing apparatus, comprising the steps of:

   focusing with a lens the image of the object as an optical image;
   converting the optical image to an electric signal;
   measuring a distance between the lens and the object;
   selecting either one of a first light controller and a second light controller,
   wherein the first light controller is configured to instruct a projection of a preliminary light from a lighting unit to the object before conducting an image capture operation, to compute an emission intensity of a light flash required for capturing the image of the object based on the electric signal output by the photoelectric converting device, which is generated from a light intensity of a reflection light reflected from the object, and to emit a first light flash having the computed emission intensity for the image capture operation, and
   the second light controller is configured to instruct a projection of a second light flash from the lighting unit to the object when capturing the image of the object, to receive a reflection light reflected from the object with a light receiver provided for the second light controller, and to stop the projection of the second light flash when the light receiver receives a given amount of light intensity of the reflection light; and

activating any one of the first and second light controller selected by the selecting step to conduct an image capturing operation with a flash operation.

**15.** A method of capturing an image of an object, distanced from an image capturing apparatus, comprising the steps of:

focusing with a lens the image of the object as an optical image;

converting the optical image to an electric signal;

measuring a distance between the lens and the object;

setting a flash condition to each of a first light controller and second light controller by differentiating the flash condition for each of the first and second light controller, to be used for an image capturing operation,

wherein the first light controller is configured to instruct a projection of a preliminary light from a lighting unit to the object before conducting an image capture operation, to compute an emission intensity of a light flash required for capturing the image of the object based on the electric signal output by the photoelectric converting device, which is generated from a light intensity of a reflection light reflected from the object, and to emit a first light flash having the computed emission intensity for image capturing operation, and

the second light controller is configured to instruct a projection of a second light flash from the lighting unit to the object when capturing the image of the object, to receive a reflection light reflected from the object with a light receiver provided for the second light controller, and to stop the projection of the second light flash when the light receiver receives a given amount of light intensity of the reflection light; and

activating the first and second light controller concurrently when conducting an image capturing operation with the differentiated flash condition set in the setting step.

# FIG. 1A

# FIG. 1B

# FIG. 1C

# FIG. 2A

|  |
|---|
| FIG. 2A |

FIG. 2 | FIG. 2B |
| FIG. 2C |

LENS BARREL UNIT 7

| ZOOMING OPTICAL SYSTEM 7-1 | FOCUS OPTICAL SYSTEM 7-2 | APERTURE UNIT 7-3 | MECHANICAL SHUTTER UNIT 7-4 |
|---|---|---|---|
| ZOOM LENSES 7-1a | FOCUS LENSES 7-2a | APERTURE 7-3a | MECHANICAL SHUTTER 7-4a |

101 — CCD

| ZOOMING MOTOR | FOCUSING MOTOR | APERTURE MOTOR | MECHANICAL SHUTTER MOTOR |
|---|---|---|---|

7-1b   7-2b   7-3b   7-4b

MOTOR DRIVER   7-5

115-3
MICROPHONE

115-2
MICROPHONE AMP

115-1
SOUND-RECORDING CIRCUIT

116-3
SPEAKER

116-2
AUDIO AMP

116-1
SOUND-REPRODUCING CIRCUIT

# FIG. 2B

# FIG. 2C

A block diagram showing:

SDRAM — 103
- RAW-RGB IMAGE DATA
- YUV IMAGE DATA
- JPEG IMAGE DATA

MAIN CONTROLLING UNIT — 104

- 104-5 USB BLOCK → USB CONNECTOR (122)
- 104-6 SERIAL BLOCK → SERIAL DRIVER CIRCUIT (123-1) → RS-232C CONNECTOR (123-2)
- 104-1 CCD1 SIGNAL-PROCESSING BLOCK
- 104-7 JPEG CODEC BLOCK
- 104-2 CCD2 SIGNAL-PROCESSING BLOCK
- 104-8 RESIZE BLOCK
- 117 LCD DRIVER → LCD MONITOR (10)
- 104-3 CPU BLOCK
- 104-9 TV SIGNAL DISPLAY BLOCK → VIDEO AMP (118) → VIDEO JACK (119)
- 104-4 LOCAL SRAM
- 104-10 MEMORY CARD CONTROLLER BLOCK → MEMORY CARD SOCKET (121) ← MEMORY CARD

- 107 RAM
- 120 BUILT-IN MEMORY

ROM — 108
- CONTROL PROGRAM

EP 1 858 254 A2

# FIG. 3A

FIG. 3 | FIG. 3A / FIG. 3B

START

S1 — RL1 IS ON? — NO

YES

S2 — DETERMINE LIGHT INTENSITY

S3 — MEASURE DISTANCE TO OBJECT

S4 — FOCUSING OPERATION

S5 — RL2 IS ON? — NO / YES

S5a — RL1 IS ON? — YES / NO

1

# FIG. 3B

```
                    ( 1 )
                      |
                      v
                              S6
         FLASH
       OPERATION IS          NO
        REQUIRED?  ─────────────────────────────────┐
                      |                              |
                     YES                             |
                      |                              |
                      v                              |
                              S8                     |
       DISTANCE TO                                   |
    OBJECT IS SHORTER        NO                       |
    THAN REFERENCE   ───────────────┐                 |
       DISTANCE?                    |                 |
                      |             v                 |
                     YES      SET EXPOSING   S16       |
                      |         VALUE                 |
                      v           |      S17           |
   PRELIMINARY   S10              v                   |
   LIGHT EMISSION          START IMAGE                |
                      |     CAPTURING                 |
                      v           |      S18           |
   MEASURE LIGHT  S11             v                   |
    INTENSITY OF          START FLASH <──────────┐     |
  REFLECTION LIGHT             |                 |    |
                      |         v        S19     |    |
                      v       SENSOR              |    |
  COMPUTE LIGHT  S12  RECEIVE A GIVEN LIGHT  NO   |    |
    INTENSITY          INTENSITY?  ──────────────┘    |
    FOR FLASH              |                     S21   |
                      |   YES    S20          IMAGE     |
                      v     |              CAPTURING <──┘
 IMAGE CAPTURING S13  STOP FLASH            WITHOUT
    WITH FLASH         |                     FLASH
        |             |                        |
  S14   |             v                        |
        └──────> ─────────────────────────────┘
                      |
                      v
      COMPLETE
      EXPOSING
      OPERATION
                      |    S15
                      v
      STORE IMAGE
         DATA
                      |
                      v
                 ( RETURN )
```

# FIG. 4A

FIG. 4

| FIG. 4A |
|---------|
| FIG. 4B |

```
           ( START )
              │
     ┌────────┼──────────────────┐
     │        ▼              S1
     │     ◇─────────────◇  NO
     │    ◇   RL1 IS ON?   ◇──────
     │     ◇─────────────◇
     │        │ YES      S2
     │        ▼
     │  ┌──────────────────┐
     │  │ DETERMINE LIGHT  │
     │  │    INTENSITY     │
     │  └──────────────────┘
     │        │          S3
     │        ▼
     │  ┌──────────────────┐
     │  │ MEASURE DISTANCE │
     │  │    TO OBJECT     │
     │  └──────────────────┘
     │        │          S4
     │        ▼
     │  ┌──────────────────┐
     │  │ FOCUSING OPERATION│
     │  └──────────────────┘
     │        │          S5
     │   NO   ▼
     │  ◇─────────────◇
     │ ◇   RL2 IS ON?  ◇
     │  ◇─────────────◇
     │        │ YES
     │    S5a │
     │  ◇─────────────◇
     │ ◇  RL1 IS ON?   ◇
     │  ◇─────────────◇
  YES │        │ NO
     └────────┘        ▼
                     ( 2 )
```

# FIG. 4B

② → **S6** FLASH OPERATION IS REQUIRED?

— NO →

YES ↓

**S9** MACRO MODE? — NO →

**S16** SET EXPOSING VALUE
↓
**S17** START IMAGE CAPTURING
↓
**S18** START FLASH
↓
**S19** SENSOR RECEIVE A GIVEN LIGHT INTENSITY? — NO →
YES ↓
**S20** STOP FLASH

YES ↓

**S10** PRELIMINARY LIGHT EMISSION
↓
**S11** MEASURE LIGHT INTENSITY OF REFLECTION LIGHT
↓
**S12** COMPUTE LIGHT INTENSITY FOR FLASH
↓
**S13** IMAGE CAPTURING WITH FLASH

**S21** IMAGE CAPTURING WITHOUT FLASH

**S14** COMPLETE EXPOSING OPERATION
↓
**S15** STORE IMAGE DATA
↓
RETURN

# FIG. 5A

FIG. 5 | FIG. 5A |
|---|
| FIG. 5B |

```
                    ( START )
                        │
        ┌───────────────┤◄◄
        │               ▼              S1
        │          ╱ RL1 IS ON? ╲──── NO ────┐
        │          ╲            ╱             │
        │               │ YES      S2        │
        │               ▼                    │
        │      ┌──────────────────┐          │
        │      │ DETERMINE LIGHT  │          │
        │      │    INTENSITY     │          │
        │      └──────────────────┘          │
        │               │         S3         │
        │               ▼                    │
        │      ┌──────────────────┐          │
        │      │ MEASURE DISTANCE │          │
        │      │    TO OBJECT     │          │
        │      └──────────────────┘          │
        │               │                    │
        │               ▼          S3a       │
        │          ╱ MEASURED  ╲             │
        │          ╱ DISTANCE IS ╲── NO ──┐  │
        │          ╲    OK?    ╱          │  │
        │               │ YES    S3b      │ S3c │
        │               ▼                 ▼     │
        │      ┌──────────────────┐  ┌──────────────────┐
        │      │ SET DISTANCE NG  │  │ SET DISTANCE NG  │
        │      │   FLAG TO 0      │  │   FLAG TO 1      │
        │      └──────────────────┘  └──────────────────┘
        │               │         S4        │
        │               ▼                   │
        │      ┌──────────────────┐         │
        │      │    FOCUSING      │         │
        │      │   OPERATION      │         │
        │      └──────────────────┘         │
        │               │                   │
        ├───────────────┤◄◄─────────────────┘
        │               ▼          S5
        │    NO    ╱ RL2 IS ON? ╲
        │  ┌──────╲            ╱
        │  │           │ YES
        │  ▼           ▼
        │  ╱ RL1 IS ON? ╲  S5a
        │  ╲           ╱        ( 3 )
        │ YES │   NO
        └─────┘
```

EP 1 858 254 A2

# FIG. 5B

③

S6
FLASH OPERATION IS REQUIRED? — NO

YES

S7
DISTANCE NG FLAG IS 0? — NO

YES

S8
DISTANCE TO OBJECT IS SHORTER THAN REFERENCE DISTANCE? — NO

YES

S10 PRELIMINARY LIGHT EMISSION

S11 MEASURE LIGHT INTENSITY OF REFLECTION LIGHT

S12 COMPUTE LIGHT INTENSITY FOR FLASH

S13 IMAGE CAPTURING WITH FLASH

S16 SET EXPOSING VALUE

S17 START IMAGE CAPTURING

S18 START FLASH

S19 SENSOR RECEIVE A GIVEN LIGHT INTENSITY? — NO

YES

S20 STOP FLASH

S21 IMAGE CAPTURING WITHOUT FLASH

S14 COMPLETE EXPOSING OPERATION

S15 STORE IMAGE DATA

RETURN

27

**FIG. 6A**

FIG. 6

| FIG. 6A |
|---|
| FIG. 6B |

FROM S6

S7a — DISTANCE NG FLAG IS 1? — NO

YES

S30 — SET PRELIMINARY EMISSION INTENSITY

S31 — PRELIMINARY LIGHT EMISSION

S32 — MEASURE LIGHT INTENSITY OF REFLECTION LIGHT

S8 — DISTANCE TO OBJECT IS SHORTER THAN REFERENCE DISTANCE? — NO → ④

YES

S33 — PHOTOMETRIC RESULT IS SATURATED AT HIGHER LUMINANCE LEVEL?

YES

NO

S10 — PRELIMINARY LIGHT EMISSION

S34 — PHOTOMETRIC RESULT IS SATURATED AT LOWER LUMINANCE LEVEL? — YES → ⑤

NO

S11 — MEASURE LIGHT INTENSITY OF REFLECTION LIGHT

SET LIGHT FLASH INTENSITY — S40

S12 — COMPUTE LIGHT INTENSITY FOR FLASH

IMAGE CAPTURING WITH FLASH — S41

S13 — IMAGE CAPTURING WITH FLASH

⑥

S14 — COMPLETE EXPOSING OPERATION

S15 — STORE IMAGE DATA

RETURN

28

# FIG. 6B

④

⑤ →

S16

SET EXPOSING
VALUE

S17

START IMAGE
CAPTURING

S18

START FLASH

S19

SENSOR
RECEIVE A GIVEN LIGHT
INTENSITY?

NO

YES  S20

STOP FLASH

⑥

# FIG. 7

```
                    ( FROM S6 )
                         │
                         ▼
S30 ─┤ SET PRELIMINARY EMISSION
       INTENSITY
                         │
                         ▼
S31 ─┤ PRELIMINARY LIGHT EMISSION
                         │
                         ▼
S32 ─┤ MEASURE LIGHT INTENSITY
       OF REFLECTION LIGHT
                         │
                         ▼
S43 ─┤ SET LIGHT FLASH INTENSITY
       FOR IMAGE CAPTURING (SET
       TIME Tsy FOR FLASH ON-TIME)
                         │
                         ▼
S44 ─┤ SET UPPER LIMIT OF LIGHT
       INTENSITY
                         │
                         ▼
S45 ─┤ START IMAGE CAPTURING
       OPERATION
                         │
                         ▼
S46 ─┤ START FLASH OPERATION
                         │
                         ▼
S19    SENSOR
       RECEIVE A GIVEN LIGHT        YES
       INTENSITY?
                        NO
                         │
                         ▼
S47    TIME Tsy HAS ELAPSED?     NO
                        YES
                         │
                         ▼
S20 ─┤ STOP FLASH
                         │
                         ▼
S14 ─┤ COMPLETE EXPOSING
       OPERATION
                         │
                         ▼
S15 ─┤ STORE IMAGE DATA
                         │
                         ▼
                    ( RETURN )
```

# FIG. 8A

FIG. 8

| FIG. 8A |
|---------|
| FIG. 8B |

FROM S6

S30

SET PRELIMINARY EMISSION
INTENSITY

S31

PRELIMINARY LIGHT EMISSION

S32

MEASURE LIGHT INTENSITY
OF REFLECTION LIGHT

S8

DISTANCE
TO OBJECT IS SHORTER
THAN REFERENCE
DISTANCE?

NO

YES

S43

SET LIGHT FLASH
INTENSITY FOR IMAGE
CAPTURING (SET TIME Tsy
FOR FLASH ON-TIME)

S43a

SET LIGHT FLASH
INTENSITY FOR IMAGE
CAPTURING (SET TIME Tsz
FOR FLASH ON-TIME)

S61

SET MODIFIED EXPOSURE
LEVEL

S61a

SET NORMAL EXPOSURE
LEVEL

S45

START IMAGE CAPTURING
OPERATION

7

# FIG. 8B

```
                    ( 7 )
                      │
   S46                ▼
        ┌──────────────────────────┐
        │  START FLASH OPERATION    │
        └──────────────────────────┘
                      │
    ┌──────────────►  ▼
    │ S19          ◇─────────────────◇
    │          ◇─────────────────────────◇
    │      ◇         SENSOR                  ◇  YES
    │      ◇  RECEIVE A GIVEN LIGHT          ◇──────┐
    │      ◇         INTENSITY?              ◇       │
    │          ◇─────────────────────────◇          │
    │                  │ NO                          │
    │  S47             ▼                             │
    │ NO   ◇─────────────────────────◇              │
    └──────◇         GIVEN                ◇          │
           ◇    TIME HAS ELAPSED?         ◇          │
              ◇─────────────────────────◇           │
                      │ YES         ◄────────────────┘
   S20                ▼
        ┌──────────────────────────┐
        │       STOP FLASH          │
        └──────────────────────────┘
   S14                │
                      ▼
        ┌──────────────────────────┐
        │   COMPLETE EXPOSING       │
        │       OPERATION           │
        └──────────────────────────┘
   S15                │
                      ▼
        ┌──────────────────────────┐
        │    STORE IMAGE DATA       │
        └──────────────────────────┘
                      │
                      ▼
                 ( RETURN )
```

# FIG. 9A

1ST
LIGHTING
CONTROLLER

2ND
LIGHTING
CONTROLLER

# FIG. 9B

1ST
LIGHTING
CONTROLLER

2ND
LIGHTING
CONTROLLER

# FIG. 10A

# FIG. 10B

# FIG. 11

51b

51a

BLOCK 1L

BLOCK 2L

BLOCK 3L

BLOCK 4L

BLOCK 5L

BLOCK 6L

BLOCK 1R

BLOCK 2R

BLOCK 3R

BLOCK 4R

BLOCK 5R

BLOCK 6R

EP 1 858 254 A2

# FIG. 12A

LIGHT INTENSITY
DATA FOR
LIGHT SENSOR
51a

X1+X2

LIGHT INTENSITY
DATA FOR
LIGHT SENSOR
51b

# FIG. 12B

MAXIMUM VALUE

CONTRAST VALUE

MINIMUM VALUE

# FIG. 13

S

R

L

# FIG. 14

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2006136928 A